# EUROPÄISCHE PATENTSCHRIFT

(11) **EP 2 399 174 B1**
(45) Veröffentlichungstag und Bekanntmachung des Hinweises auf die Patenterteilung: **06.08.2014**
(21) Anmeldenummer: 10708907.0
(22) Anmeldetag: 17.02.2010
(51) Int. Cl.: G05B 9/03, G05B 19/042, G05B 23/02

(54) **VERFAHREN UND VORRICHTUNG ZUM ERSTELLEN EINES ANWENDERPROGRAMMES FÜR EINE SICHERHEITSSTEUERUNG**
METHOD AND APPARATUS FOR CREATING AN APPLICATION PROGRAM FOR A SAFETY CONTROLLER
PROCÉDÉ ET DISPOSITIF POUR RÉALISER UN PROGRAMME D'APPLICATION POUR UNE COMMANDE DE SÉCURITÉ

(30) Priorität: 23.02.2009 DE 102009011679
(43) Veröffentlichungstag der Anmeldung: 28.12.2011
(73) Patentinhaber: Pilz GmbH & Co. KG, 73760 Ostfildern (DE)
(72) Erfinder: MOOSMANN, Peter, 73760 Ostfildern (DE); REUSCH, Matthias, 72531 Hohenstein (DE); WALTER, Herbert, 73278 Schlierbach (DE); HECKEL, Andreas I, 73630 Remshalden (DE)
(74) Vertreter: Duhme, Torsten
(86) Internationale Anmeldenummer: PCT/EP2010/000991
(87) Internationale Veröffentlichungsnummer: WO 2010/094466

(56) Entgegenhaltungen:
- US-A- 5 504 473
- US-A1- 2004 064 205
- US-A1- 2007 255 429
- US-A1- 2009 030 534

## Beschreibung

Die vorliegende Erfindung betrifft ein Verfahren und eine Vorrichtung zum Erstellen eines Anwenderprogrammes für eine Sicherheitssteuerung, die dazu ausgebildet ist, eine automatisierte Anlage mit einer Vielzahl von Sensoren und einer Vielzahl von Aktoren zu steuern, wobei das Anwenderprogramm einen ersten Programmteil umfasst, in dem sicherheitsrelevante Programmvariablen fehlersicher verarbeitet werden und zumindest einen zweiten Programmteil umfasst, in dem nicht-sicherheitsrelevante Programmvariablen verarbeitet werden, wobei für die nicht-sicherheitsrelevanten Programmvariablen innerhalb des zweiten Programmteils eine fehlersichere Verarbeitung nicht erforderlich ist.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und eventuell weitere Signal- oder Datenverarbeitungsschritte Ausgangssignale erzeugt. Die Ausgangssignale können dann Aktoren zugeführt werden, die in Abhängigkeit von den Eingangssignalen Aktionen oder Reaktionen in einer gesteuerten Anlage bewirken.

Ein bevorzugtes Anwendungsgebiet für derartige Sicherheitssteuerungen ist die Überwachung von Not-Aus-Tastern, Zwei-Hand-Steuerungen, Schutztüren oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktors den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlage oder Maschine gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1 oder einer vergleichbaren Norm, beispielsweise der Norm IEC 61508 oder der Norm EN ISO 13849-1 niedergelegt sind. Im Folgenden wird daher unter einer Sicherheitssteuerung ein Gerät bzw. eine Vorrichtung verstanden, die zumindest die Sicherheitskategorie 3 der genannten europäischen Norm EN 954-1 erfüllt oder deren Safety Integrity Level (SIL) zumindest die Stufe 2 gemäß der genannten Norm IEC 61508 erreicht.

Eine programmierbare Sicherheitssteuerung bietet dem Anwender die Möglichkeit, die logischen Verknüpfungen und gegebenenfalls weitere Signal- oder Datenverarbeitungsschritte mit Hilfe einer Software, dem genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Bei Anlagen nach dem Stand der Technik kommen üblicherweise zwei programmierbare Steuerungen zum Einsatz. Eine Sicherheitssteuerung zur Erledigung der Sicherheitsaufgaben und eine Standardsteuerung zur Erledigung der Standardaufgaben. Vereinzelt kommt auch eine gemeinsame Steuerung zum Einsatz, mit der sämtliche Standard- und Sicherheitsaufgaben erledigt werden. Bei beiden Realisierungsformen erfolgt die Erledigung der Sicherheitsaufgaben durch eine fehlersichere Verarbeitung von sicherheitsrelevanten Programmvariablen. Hierzu werden durch Sicherheitssensoren, das sind fehlersicher ausgebildete Sensoren, sicherheitsrelevante Größen erfasst und mittels sicherheitsrelevanter Steuerungseingangssignale der Sicherheitssteuerung oder der gemeinsamen Steuerung zugeführt. In dieser werden unter Verwendung sicherheitsrelevanter Programmvariablen Werte für sicherheitsrelevante Steuerungsausgangssignale ermittelt. Mit diesen Steuerungsausgangssignalen werden Sicherheitsaktoren, das sind fehlersicher ausgebildete Aktoren, zur Durchführung sicherheitsrelevanter Aktionen angesteuert. Die Erledigung der Standardaufgaben erfolgt durch Verarbeitung von nicht-sicherheitsrelevanten Programmvariablen, für die eine fehlersichere Verarbeitung nicht erforderlich ist. Hierzu werden durch Standardsensoren nicht-sicherheitsrelevante Größen, die auch als prozessrelevante Größen bezeichnet werden, erfasst. Mittels nicht-sicherheitsrelevanter Steuerungseingangssignale werden diese Größen der Standardsteuerung oder der gemeinsamen Steuerung zugeführt. In dieser werden unter Verwendung nicht-sicherheitsrelevanter Programmvariablen Werte für nicht-sicherheitsrelevante Steuerungsausgangssignale ermittelt. Mit diesen Steuerungsausgangssignalen werden Standardaktoren angesteuert, die dann nicht-sicherheitsrelevante Aktionen durchführen.

Bei beiden Realisierungsformen ist für die Erledigung der Sicherheitsaufgaben der Einsatz von teuren, weil fehlersicher ausgebildeten Sensoren erforderlich. Es können hierfür weder kostengünstige, weil nicht-fehlersicher ausgebildete Standardsensoren eingesetzt, noch Werte von nicht-sicherheitsrelevanten Programmvariablen verwendet werden.

Sowohl der Einsatz programmierbarer Sicherheitssteuerungen als auch der Einsatz einer gemeinsamen Steuerung für die Erledigung sämtlicher Standard- und Sicherheitsaufgaben können dazu beitragen, die Flexibilität beim Erstellen von Anwenderprogrammen und somit bei der Realisierung von Sicherheitssteuerungen zu steigern. Sie sind jedoch hinsichtlich der Kosten - Kosten für das Erstellen des Anwenderprogrammes und Kosten für die zur Realisierung der Sicherheitssteuerung benötigten Komponenten - noch nicht optimal.

US 2007/0255429 A1 offenbart ein Steuerungssystem zur automatischen Steuerung einer Anlage, wobei die Steuerung sowohl sicherheitsrelevante Programmvariablen als auch nicht-sicherheitsrelevante (Standard-)Programmvariablen verarbeitet. Dementsprechend beinhaltet die Steuerung fehlersichere Programmteile und sogenannte Standard-Programmteile. Auf der Steuerung werden die fehlersicheren Programmteile und Standard-Programmteile vollständig getrennt ausgeführt. Das Steuerungssystem beinhaltet abgesetzte Eingabe-/Ausgabeeinheiten, an die Sensoren und/oder Aktoren angeschlossen sind. Die Aktoren werden von den fehlersicheren Programmteilen und Standard-Programmteilen gemeinsam angesteuert nach Art einer UND-Verknüpfung. Die Verwendung oder Auswertung von nicht-sicherheitsrelevanten Programmvariablen im fehlersicheren Programmteil ist jedoch nicht vorgesehen.

US 2009/0030534 A1 offenbart ein Verfahren zum Programmieren einer Sicherheitssteuerung, wobei mit Hilfe einer graphischen Programmieroberfläche zunächst ein Verdrahtuhgsplan erstellt wird, nach dem die Sicherheitssteuerung mit Sensoren und Aktoren verbunden wird. Anschließend kann anhand von Elementbeschreibungen, die in der Sicherheitssteuerung und/oder den Sensoren und Aktoren gespeichert sind, eine teilweise automatisierte Programmerstellung erfolgen. Zu diesem Zweck existiert in einem Programmiergerät eine Bibliothek von Programmteilen, die in Abhängigkeit von den Elementbeschreibungen ausgewählt und zu einem Programm zusammengestellt werden.

US 5,504,473 offenbart ein Verfahren zum Analysieren von Signalen eines redundanten Bewegungsmelders. Im Rahmen der Analyse stellt das System eine vereinfachte Version eines aktuellen Signals zur Verfügung.

US 2004/0064205 A1 beschreibt ein weiteres Verfahren und eine entsprechende Vorrichtung zum Programmieren einer Sicherheitssteuerung. Auch in diesem Fall erfolgt die Programmierung anhand einer graphischen Programmieroberfläche, auf der ein Programmierer logische Abhängigkeiten mit Hilfe von graphischen Programmsymbolen erstellen kann.

Es ist daher eine Aufgabe der vorliegenden Erfindung, ein Verfahren und eine Vorrichtung der eingangs genannten Art weiterzubilden, um die Kosten beim Erstellen eines Anwenderprogrammes mit sicherheitsrelevanten Funktionen und somit der Realisierung einer Sicherheitssteuerung weiter zu reduzieren und die Flexibilität zu steigern, um somit eine einfachere, schnellere und übersichtlichere Programmierung einer Sicherheitssteuerung zu ermöglichen.

Diese Aufgabe wird durch ein Verfahren der eingangs genannten Art gelöst, bei dem folgende Schritte ausgeführt werden:
- Definieren einer Anzahl von sicherheitsrelevanten Programmvariablen,
- Definieren einer Anzahl von nicht-sicherheitsrelevanten Programmvariablen,
- Auswählen einer sicherheitsrelevanten Programmvariablen aus der Anzahl von sicherheitsrelevanten Programmvariablen,
- Auswählen einer ersten nicht-sicherheitsrelevanten Programmvariablen aus der Anzahl von nicht-sicherheitsrelevanten Programmvariablen, wobei der ersten nicht-sicherheitsrelevanten Programmvariablen beim Ausführen des Anwenderprogrammes wiederholt ein Momentanwert zugewiesen wird,
- Definieren zumindest einer Zuweisungsbedingung, die beim Ausführen des Anwenderprogrammes abgearbeitet wird,
- Definieren einer Zuordnung, die die ausgewählte erste nicht-sicherheitsrelevante Programmvariable der ausgewählten sicherheitsrelevanten Programmvariablen zuordnet, wobei der Momentanwert der ausgewählten ersten nicht-sicherheitsrelevanten Programmvariablen beim Ausführen des Anwenderprogrammes in Abhängigkeit von der Zuweisungsbedingung der ausgewählten sicherheitsrelevanten Programmvariabeln zugewiesen wird.

Die Aufgabe wird ferner durch eine Vorrichtung der eingangs genannten Art gelöst, die folgende Einheiten aufweist: Einheiten zum Definieren einer Anzahl von sicherheitsrelevanten Programmvariablen und zum Auswählen einer sicherheitsrelevanten Programmvariablen aus der Anzahl von sicherheitsrelevanten Programmvariablen, zum Definieren einer Anzahl von nicht-sicherheitsrelevanten Programmvariablen und zum Auswählen einer ersten nicht-sicherheitsrelevanten Programmvariablen aus der Anzahl von nicht-sicherheitsrelevanten Programmvariablen, wobei der ersten nicht-sicherheitsrelevanten Programmvariablen beim Ausführen des Anwenderprogramms wiederholt ein Momentanwert zugewiesen wird, zum Definieren zumindest einer Zuweisungsbedingung, die beim Ausführen des Anwenderprogrammes abgearbeitet wird, und zum Definieren einer Zuordnung, die die ausgewählte erste nicht-sicherheitsrelevante Programmvariable der ausgewählten sicherheitsrelevanten Programmvariablen zuordnet, wobei der Momentanwert der ausgewählten ersten nicht-sicherheitsrelevanten Programmvariablen beim Ausführen des Anwenderprogramms in Abhängigkeit von der Zuweisungsbedingung der ausgewählten sicherheitsrelevanten Programmvariablen zugewiesen wird.

Dem neuen Verfahren und der neuen Vorrichtung liegt die Idee zugrunde, beim Ausführen des Anwenderprogrammes den Momentanwert einer ausgewählten ersten nicht-sicherheitsrelevanten Programmvariablen in Abhängigkeit einer Zuweisungsbedingung einer ausgewählten sicherheitsrelevanten Programmvariablen zuzuweisen und somit, verallgemeinert ausgedrückt, eine nicht-sicherheitsrelevante Programmvariable in eine sicherheitsrelevante Programmvariable umzuwandeln. Dadurch wird die Flexibilität beim Erstellen eines Anwenderprogrammes gesteigert. Für das Erledigen von Sicherheitsaufgaben stehen zusätzlich zu den sicherheitsrelevanten Programmvariablen und den durch diese repräsentierten sicherheitsrelevanten Größen nunmehr auch nicht-sicherheitsrelevante Programmvariablen und durch diese repräsentierte nicht-sicherheitsrelevante Größen zur Verfügung. Somit erhöht sich für die einzelnen Sicherheitsaufgaben die Anzahl der programmtechnisch realisierbaren Lösungen.

Zur Steigerung der Flexibilität trägt auch bei, dass die benötigte Zuweisungsbedingung vom Ersteller des Anwenderprogrammes frei definiert werden kann. Somit können verschiedene nicht-sicherheitsrelevante Programmvariablen und durch diese repräsentierte physikalische Größen für die Umwandlung verwendet werden.

Das Zuweisen eines Momentanwerts einer ausgewählten ersten nicht-sicherheitsrelevanten Programmvariablen zu einer ausgewählten sicherheitsrelevanten Programmvariablen führt dazu, dass für das Bereitstellen der Momentanwerte der sicherheitsrelevanten Programmvariable ein fehlersicher ausgebildeter Sensor nicht erforderlich ist. Diejenige physikalische Größe, die die sicherheitsrelevante Programmvariable repräsentiert, kann somit auch unter Verwendung eines nicht-fehlersicher ausgebildeten Sensors erfasst werden. Dies trägt zu einer Reduzierung der Kosten bei.

Für die Umwandlung einer nicht-sicherheitsrelevanten Programmvariablen in eine sicherheitsrelevante Programmvariable sind im Wesentlichen lediglich eine Zuweisungsbedingung und eine Zuordnung zu definieren. Dies ermöglicht eine übersichtliche, einfache und somit schnelle Programmierung einer Sicherheitssteuerung, was auch zu einer Erhöhung der Fehlersicherheit beiträgt.

Die oben genannte Aufgabe ist daher vollständig gelöst.

In einer weiteren Ausgestaltung der Erfindung repräsentiert die Zuweisungsbedingung eine Abfrage, mit der festgestellt wird, ob die ausgewählte erste nicht-sicherheitsrelevante Programmvariable eine für sicherheitsrelevante Programmvariablen geforderte Zuverlässigkeitsanforderung erfüllt.

Diese Maßnahme stellt sicher, dass trotz der Übergabe von Momentanwerten einer nicht-sicherheitsrelevanten Programmvariablen an eine sicherheitsrelevante Programmvariable ein fehlersicherer Betrieb der Sicherheitssteuerung möglich ist. Für die Erledigung von Sicherheitsaufgaben können somit zusätzlich zu sicherheitsrelevanten Programmvariablen und den von diesen repräsentierten physikalischen Größen auch nicht-sicherheitsrelevante Programmvariablen und von diesen repräsentierte Größen verwendet werden. Des Weiteren wird zur Erhöhung der Fehlersicherheit der Wert der ausgewählten ersten nicht-sicherheitsrelevanten Programmvariablen der ausgewählten sicherheitsrelevanten Programmvariablen nur dann zugewiesen, wenn die Zuweisungsbedingung erfüllt ist.

Mit Blick auf ein technisches System stellt sich die Zuverlässigkeit als Verlässlichkeit im Hinblick auf ein kontinuierliches korrektes Erbringen einer vereinbarten Leistung innerhalb definierter Wahrscheinlichkeitsgrenzen und Zeitabschnitte dar. Die Zuverlässigkeit ist somit ein Grad des Vertrauens, das aufgrund geringer Versagenswahrscheinlichkeit, großer Korrektheitswahrscheinlichkeit oder geringer Ausfall- bzw. Versagensrate gerechtfertigt erscheint.

Die für sicherheitsrelevante Programmvariablen geforderte Zuverlässigkeitsanforderung definiert in erster Linie eine Korrektheitswahrscheinlichkeit für deren Momentanwerte. Die Zuverlässigkeitsanforderung kann beispielsweise vorgeben, dass der Momentanwert einer sicherheitsrelevanten Programmvariablen allenfalls mit einer zu vernachlässigenden geringen Abweichung mit einem tatsächlich vorliegenden Wert einer physikalischen Größe übereinstimmt. Üblicherweise werden zur Erfüllung dieser Zuverlässigkeitsanforderung fehlersicher ausgebildete Sensoren eingesetzt. Somit können Fehler bei der Erfassung einer physikalischen Größe erkannt und die geforderte Korrektheitswahrscheinlichkeit eingehalten werden. Ob die geforderte Zuverlässigkeitsanforderung erfüllt ist oder nicht, wird vorteilhafterweise durch Auswerten des Momentanwerts der ausgewählten ersten nicht-sicherheitsrelevanten Programmvariable festgestellt.

In einer weiteren Ausgestaltung der Erfindung wird als Zuweisungsbedingung eine Plausibilitätsabfrage definiert, mit der überprüft wird, ob die ausgewählte erste nicht-sicherheitsrelevante Programmvariable und eine ausgewählte weitere Programmvariable konsistent zueinander sind.

Diese Maßnahme ermöglicht eine große Flexibilität, da die beliebige Auswahl einer weiteren Programmvariablen einen großen Spielraum für das Definieren einer Plausibilitätsabfrage eröffnet. Zudem lässt sich eine Plausibilitätsabfrage unter Verwendung zweier Programmvariablen ohne großen Aufwand realisieren.

Mit der Überprüfung, ob die beiden Programmvariablen konsistent zueinander sind, wird festgestellt, ob die beiden Programmvariablen stimmig zueinander sind. Mit anderen Worten: es wird festgestellt, ob die beiden Programmvariablen übereinstimmen. Dieser Überprüfung liegt folgende Annahme zugrunde: Im Idealfall repräsentieren sowohl die ausgewählte erste nicht-sicherheitsrelevante Programmvariable als auch die ausgewählte weitere Programmvariable dieselbe physikalische Größe, beispielsweise eine Geschwindigkeit oder einen Abstand. Aber auch für den Fall, dass die beiden Programmvariablen unterschiedliche physikalische Größen repräsentieren, die allerdings über eine physikalische Gesetzmäßigkeit zusammenhängen, kann diese Überprüfung durchgeführt werden. In diesem Fall ist jedoch für eine der beiden Programmvariablen ein Umrechnen deren Momentanwerte unter Berücksichtigung der physikalischen Gesetzmäßigkeit erforderlich.

Vorteilhafterweise erfolgt die Überprüfung durch Auswerten der Momentanwerte der beiden Programmvariablen.

Beim Auswerten der Momentanwerte wird überprüft, ob die Momentanwerte der beiden Programmvariablen ein definiertes Kriterium erfüllen. Hierfür kommen prinzipiell zahlreiche unterschiedlich ausgerichtete Kriterien in Frage. Zum einen kann ein Kriterium verwendet werden, welches auf die Momentanwerte als solche gerichtet ist. In diesem Fall wird überprüft, ob die Momentanwerte als solche ein konsistentes Verhalten zeigen. Es kann beispielsweise überprüft werden, ob eine aus den beiden Momentanwerten gebildete Differenz kleiner als ein definierter Schwellenwert ist oder ob ein aus den beiden Momentanwerten gebildeter Quotient in einem definierten Intervall liegt, welches um den Wert 1 angeordnet ist. Zum anderen kann ein Kriterium verwendet werden, welches auf das zeitliche Verhalten der Momentanwerte gerichtet ist. Somit wird überprüft, ob die Momentanwerte ein konsistentes zeitliches Verhalten zeigen. In diesem Fall wird für die beiden Programmvariablen eine zeitliche Ableitung ermittelt, vorteilhafterweise näherungsweise in Form eines Differenzenquotienten. Auch bei diesem Kriterium kann wie vorstehend beschrieben eine Differenz oder ein Quotient in entsprechender Weise ausgewertet werden. Die Verwendung eines auf das zeitliche Verhalten gerichteten Kriteriums hat den Vorteil, dass zu einem sehr frühen Zeitpunkt eine Abweichung zwischen den beiden Programmvariablen festgestellt werden kann, lang bevor sich eine beträchtliche Abweichung in den Momentanwerten selbst bemerkbar macht. Vorteilhafterweise liegen die Momentanwerte der beiden Programmvariablen, die für das Bilden der Differenz oder des Quotienten verwendet werden, jeweils paarweise zu einem bestimmten Zeitpunkt vor oder innerhalb eines kleinen, auf diesen Zeitpunkt bezogenen Zeitintervalls.

Vorteilhafterweise werden mehrere Kriterien miteinander kombiniert. Dadurch lassen sich sehr zuverlässige Plausibilitätsabfragen erstellen, was zu einer hohen Fehlersicherheit führt.

Vorzugsweise handelt es sich bei der ausgewählten weiteren Programmvariablen um eine nicht-sicherheitsrelevante Programmvariable. In diesem Fall kann eine sicherheitsrelevante Programmvariable allein unter Verwendung von nicht-sicherheitsrelevanten Programmvariablen generiert werden, was zu einer sehr großen Flexibilität führt.

In einer weiteren Ausgestaltung der zuvor genannten Maßnahme handelt es sich sowohl bei der ausgewählten ersten nicht-sicherheitsrelevanten Programmvariablen als auch bei der ausgewählten weiteren nicht-sicherheitsrelevanten Programmvariablen jeweils um eine Programmeingangsvariable, wobei der ausgewählten ersten nicht-sicherheitsrelevanten Programmvariablen ein Momentanwert zugewiesen wird, der einen Wert eines mit einem ersten Sensor ermittelten ersten Sensorsignals repräsentiert, und wobei der ausgewählten weiteren nicht-sicherheitsrelevanten Programmvariablen ein Momentanwert zugewiesen wird, der einen Wert eines mit einem zweiten Sensor ermittelten zweiten Sensorsignals repräsentiert. Somit kann in einfacher Art und Weise durch den Einsatz zweier nicht-fehlersicher ausgebildeter Sensoren eine nicht-sicherheitsrelevante Programmvariable in eine sicherheitsrelevante Programmvariable umgewandelt werden.

In einer weiteren Ausgestaltung der zuvor genannten Maßnahme sind die beiden Sensoren vorteilhafterweise diversitär ausgeführt. Mit den beiden Sensoren wird somit dieselbe physikalische Größe erfasst, allerdings mittels unterschiedlicher Messprinzipien. Beispielsweise kann die physikalische Größe mit dem einen Sensor spannungsbasiert und mit dem anderen Sensor strombasiert erfasst werden. Diese Maßnahme gewährleistet ein sehr hohes Maß an Fehlersicherheit.

Durch geeignete Auswahl bzw. Kombination der beiden Sensoren können zudem äußere Einflüsse, wie beispielsweise Temperaturdrift oder Ähnliches, kompensiert werden.

Alternativ kann als ausgewählte weitere Programmvariable auch eine sicherheitsrelevante Programmvariable verwendet werden, was zu einer weiteren Steigerung der Flexibilität beiträgt.

In einer weiteren Ausgestaltung der Erfindung wird als Zuweisungsbedingung eine Plausibilitätsabfrage definiert, mit der überprüft wird, ob die ausgewählte erste nicht-sicherheitsrelevante Programmvariable ein Vergleichskriterium erfüllt, wobei das Vergleichskriterium eine charakteristische Eigenschaft der ausgewählten ersten nicht-sicherheitsrelevanten Programmvariablen repräsentiert.

Diese Maßnahme besitzt den Vorteil, dass die Feststellung, ob die Zuverlässigkeitsanforderung erfüllt ist, allein anhand der ausgewählten ersten nicht-sicherheitsrelevanten Programmvariable durchgeführt werden kann. Eine weitere Programmvariable wird nicht benötigt. Diese Maßnahme ermöglicht eine große Flexibilität und einfache Realisierung. Für den Fall, dass es sich bei der ausgewählten ersten nicht-sicherheitsrelevanten Programmvariable um eine Programmeingangsvariable handelt, wird demzufolge für die Umwandlung einer nicht-sicherheitsrelevanten Programmvariabeln in eine sicherheitsrelevante Programmvariable kein weiterer Sensor benötigt. Dies ermöglicht eine sehr kostengünstige Umwandlung.

Insgesamt sind verschiedene Vergleichskriterien denkbar. Zum einen kann ein auf die Momentanwerte als solche gerichtetes Vergleichskriterium verwendet werden. Beispielsweise handelt es sich um ein Intervall, innerhalb dem die Momentanwerte der ausgewählten ersten nicht-sicherheitsrelevanten Programmvariablen erwartungsgemäß liegen müssen. Dieses Intervall kann durch einen üblicherweise zu erwartenden Maximalwert und durch einen üblicherweise zu erwartenden Minimalwert vorgegeben werden. Zum anderen kann ein auf das zeitliche Verhalten der Momentanwerte gerichtetes Vergleichskriterium verwendet werden. Beispielsweise handelt es sich um ein Intervall, innerhalb dem der für zunehmende Momentanwerte ermittelte zeitliche Gradient erwartungsgemäß liegen muss. Entsprechend kann für abnehmende Momentanwerte vorgegangen werden.

Vorteilhafter setzt sich das Vergleichskriterium aus mehreren Einzelabfragen zusammen. So kann das Vergleichskriterium beispielsweise sowohl Vorgaben für die Momentanwerte als solche als auch Vorgaben für das zeitliche Verhalten der Momentanwerte enthalten. Somit kann überprüft werden, ob die Momentanwerte ausgehend von einem ersten Werteniveau ein zweites Werteniveau innerhalb einer definierten Zeitspanne einnehmen und ob der nach der Zeitspanne vorliegende Momentanwert in einem definierten Intervall liegt. Entsprechendes ist auch für abnehmende Momentanwerte möglich. Auch kann ein Vergleichskriterium für zunächst zunehmende und dann abnehmende Momentanwerte definiert werden.

In einer weiteren Ausgestaltung der Erfindung umfasst das Anwenderprogramm eine Vielzahl von Wandlungsanweisungen, wobei die Wandlungsanweisungen die Zuordnung und die Zuweisungsbedingung repräsentieren, wobei zumindest ein Teil der Wandlungsanweisungen in dem ersten Programmteil enthalten sind.

Die Wandlungsanweisungen sind somit in demjenigen Programmteil enthalten, in dem sicherheitsrelevante Programmvariablen fehlersicher verarbeitet werden und der Sicherheitssteuerungsanweisungen zum Ansteuern von Sicherheitsaktoren enthält. Folglich ist auch bei der Umwandlung einer nicht-sicherheitsrelevanten Programmvariablen in eine sicherheitsrelevante Programmvariable Fehlersicherheit gegeben. Dies bedeutet, dass die aus der Umwandlung hervorgegangene sicherheitsrelevante Programmvariable fehlersicher ist, wohingegen die nicht-sicherheitsrelevante Programmvariable nach wie vor nicht-fehlersicher ist. Vorteilhafterweise sind alle Wandlungsanweisungen in dem ersten Programmteil enthalten.

In einer weiteren Ausgestaltung der Erfindung sind ein die Zuordnung repräsentierender erster Codeanteil und ein die Zuweisungsbedingungen repräsentierender zweiter Codeanteil zu einem Programmmodul zusammengefasst.

Diese Maßnahme betrifft den Quellcode für das Anwenderprogramm. Demzufolge sind die beiden Codeanteile im Quellcode zu einem Block zusammengefasst. Somit liegt im Quellcode eine dedizierte Wandlungsstelle vor, in der die Wandlungsanweisungen zusammengefasst sind. Sowohl die Zuordnung als auch die Zuweisungsbedingung sind für die Fehlersicherheit von Relevanz und werden deshalb im Rahmen eines von einer Aufsichtsbehörde durchzuführenden Zulassungsverfahrens mit überprüft. Die Blockbildung innerhalb des Quellcodes vereinfacht das Zulassungsverfahrern. Vorzugsweise ist das Programmmodul in dem ersten Programmteil enthalten.

Eine dedizierte Wandlungsstelle versetzt den Ersteller eines Anwenderprogrammes in die Lage, sich ohne großen Aufwand einen Überblick darüber zu verschaffen, wo eine nicht-sicherheitsrelevante Programmvariable zur Generierung einer sicherheitsrelevanten Programmvariablen verwendet wird bzw. welche sicherheitsrelevant Programmvariable auf eine nicht-sicherheitsrelevante Programmvariable zurückgeht. Sind in einem Anwenderprogramm mehrere Umwandlungen vorgesehen, d.h. werden mehrere nicht-sicherheitsrelevante Programmvariablen jeweils in eine sicherheitsrelevante Programmvariable umgewandelt, so enthält das Anwenderprogramm mehrere eigenständige Programmmodule. Für jede Umwandlung existiert eine dedizierte Wandlungsstelle.

Ein weiterer Vorteil besteht darin, dass das Zusammenfassen zu einem Programmmodul eine Kapselung ermöglicht. Eine Kapselung führt dazu, dass das Programmmodul im Sinne einer Funktion durch entsprechendes Aufrufen beliebig oft wiederverwertet werden kann.

Das Zusammenfassen der beiden Codeanteile zu einem Programmmodul erfolgt vorteilhafterweise selbsttätig durch dasjenige Computerprogramm, unter dessen Verwendung das Anwenderprogramm erstellt wird.

In einer weiteren Ausgestaltung der Erfindung wird das Anwenderprogramm unter Verwendung eines auf einem Computer ablaufenden Computerprogramms erstellt, wobei das Computerprogramm ein Anzeigemodul umfasst, wobei das Anzeigemodul bewirkt, dass während des Erstellens des Anwenderprogrammes ein Quellcode für das Anwenderprogramm mittels einer Vielzahl von diesen Quellcode repräsentierender grafischer Quellcodesymbole auf einer an den Computer angeschlossenen Anzeigeeinheit angezeigt wird, wobei die grafischen Quellcodesymbole in einer Grunddarstellungsform ausgeführt sind, wobei die Vielzahl von grafischen Quellcodesymbolen eine Anzahl von grafischen Wandelungscodesymbolen umfassen, die einen in dem Quellcode enthaltenen Wandelungscode repräsentieren, wobei der Wandelungscode einen ersten Codeanteil umfasst, der die Zuordnung repräsentiert und einen zweiten Codeanteil umfasst, der die Zuweisungsbedingung repräsentiert, wobei das Computerprogramm ferner ein Erkennungsmodul umfasst, mit dem zumindest einer der beiden Codeanteile erkannt wird, wobei bei Vorliegen eines erkannten Codeanteils das Anzeigemodul bewirkt, dass zumindest ein grafisches Wandelungscodesymbol, welches in der Anzahl von grafischen Wandelungscodesymbolen enthalten ist, in einer gegenüber der Grunddarstellungsform modifizierten Darstellungsform dargestellt wird.

Die Darstellung eines modifizierten grafischen Wandelungssymbols bewirkt eine Markierung in der Darstellung des Anwenderprogrammes. Somit kann der Ersteller eines Anwenderprogrammes den im Anwenderprogramm enthaltenen Umfang, der den Wandlungscode repräsentiert, d.h. die dedizierte Wandlungsstelle, problemlos lokalisieren. Diejenigen Umfänge des Anwenderprogramms, die von der Umwandlung einer nicht-sicherheitsrelevanten Programmvariablen in eine sicherheitsrelevante Programmvariable herrühren, sind somit unmittelbar erkennbar. Der Ersteller kann diese somit bei Bedarf einer kritischen Überprüfung unterziehen, was auch hinsichtlich eines Zulassungsverfahrens von Vorteil ist.

Das Darstellen eines modifizierten grafischen Wandelungssymbols und somit die Markierung in der Darstellung des Anwenderprogrammes erfolgt selbsttätig durch dasjenige Computerprogramm, unter dessen Verwendung das Anwenderprogramm erstellt wird. Der Ersteller des Anwenderprogrammes muss keine zusätzlichen Handlungen vornehmen, die über diejenigen hinausgehen, die üblicherweise für das Erstellen eines Anwenderprogramms vorzunehmen sind.

Vorteilhafterweise werden diejenigen grafischen Wandelungssymbole in einer modifizierten Darstellungsform dargestellt, die den ersten Codeanteil repräsentieren. Ergänzend können auch diejenigen grafischen Wandelungssymbole, die den zweiten Codeanteil repräsentieren, in modifizierter Darstellungsform dargestellt werden.

Es sind mehrere Ausgestaltungen denkbar, den Quellcode für ein Anwenderprogrammes mittels einer Vielzahl grafischer Symbolen darzustellen. Bei einer ersten Ausgestaltung wird das Anwenderprogramm mittels textueller Eingabe erstellt. Das Anwenderprogramm liegt somit beispielsweise in Form eines strukturierten Textes vor. Die grafischen Quellcodesymbole entsprechen hierbei einzelnen Buchstaben, Ziffern und ggf. Sonderzeichen. Bei dieser Ausgestaltung ist es denkbar, zumindest einige der Buchstaben, die den ersten Codeanteil repräsentieren, modifiziert darzustellen. Dies kann beispielsweise dadurch erfolgen, dass diese Buchstaben in einer gegenüber der Grunddarstellungsform geänderten Farbe dargestellt werden. Alternativ oder ergänzend können diese Buchstaben auch in einer gegenüber der Grunddarstellungsform geänderten Schriftauszeichnungsart, beispielsweise kursiv oder fett, dargestellt werden. Auch ist es denkbar, diese Buchstaben beispielsweise einzurücken oder derjenigen Zeile, die die ersten Buchstaben enthält, entsprechende Zeichen voranzustellen. So können beispielsweise Sterne oder ein spezieller Text, wie beispielsweise "Es folgt sicherheitsrelevanter Umwandlungscode!", vorangestellt werden. Das Voranstellen von Zeichen erfolgt durch Einfügen einer weiteren Zeile. Ergänzend können entsprechende Zeichen auch hinter derjenigen Zeile eingefügt werden, die die letzten Buchstaben enthält.

In einer bevorzugten Ausgestaltung wird mit dem Erkennungsmodul der erste Codeanteil erkannt.

Das Erkennen des ersten Codeanteils und die damit verbundene Markierung dieses Codeanteils hat den Vorteil, dass die an der Umwandlung beteiligte ausgewählte erste nicht-sicherheitsrelevante Programmvariabel und die ausgewählte sicherheitsrelevante Programmvariable in der Darstellung des Anwenderprogramms schnell ermittelbar sind. Der Ersteller eines Anwenderprogramms kann sich somit umfassend informieren. Er erkennt sofort, welche Programmvariable die Grundlage für die Umwandlung ist und welche Programmvariable durch die Umwandlung generiert wird.

Vorteilhafterweise wird der erste Codeanteil daran erkannt, dass in einem zusammenhängenden Codeanteil eine nicht-sicherheitsrelevante Programmvariable gelesen wird und der dabei gelesene Momentanwerte einer sicherheitsrelevanten Programmvariablen zugewiesen wird.

Durch das Erkennen des ersten Codeanteils sind die an der Umwandelung beteiligten Programmvariablen an sich bekannt. Dies ermöglicht, im Sinne einer umfassenderen Unterstützung des Erstellers eines Anwenderprogramms, zusätzliche Umfänge des Anwenderprogramms zu markieren. Vorzugsweise können auch diejenigen Umfänge markiert werden, die die Zuweisungsbedingung repräsentieren. Dies bewirkt eine noch auffälligere Markierung in der Darstellung des Anwenderprogramms.

In einer besonders vorteilhaften Ausgestaltung werden beide Codeanteile erkannt. In diesem Fall wird das zumindest eine grafische Wandelungscodesymbol bei Vorliegen beider Codeanteile in der gegenüber der Grunddarstellungsform modifizierten Darstellungsform dargestellt. Ferner bietet es sich auch an, sämtliche Wandelungscodesymbole in der modifizierten Darstellungsform darzustellen.

Mit Blick auf das Erstellen eines Anwenderprogrammes und die damit einhergehende Darstellung des Anwenderprogramms ist eine weitere Ausgestaltung denkbar. Hierbei wird das Anwenderprogramm unter Verwendung grafischer Symbole in Form eines sogenannten Funktion Block Diagramms erstellt. Bei dieser Ausgestaltung werden unterschiedliche Arten von grafischen Symbolen verwendet, beispielsweise Rechtecke, die ausgewählte Funktionsblöcke repräsentieren, Buchstaben sowie Platzhaltersymbole. Bei dieser Ausgestaltung sind verwendbare und somit auswählbare Programmmodule in einer Datenbank hinterlegt. Für jedes dieser Programmmodule ist in einer Symbolleiste ein kleines Platzhaltersymbol angelegt. Wird ein solches Platzhaltersymbol mittels einer Drag & Drop-Funktion ausgewählt und in einem dafür vorgesehenen Bereich einer grafischen Oberfläche abgelegt, so wird an der entsprechenden Stelle der grafischen Oberfläche ein Funktionsblock dargestellt, der das ausgewählte Programmmodul repräsentiert. In die Datenbank können auch während des Erstellens des Anwenderprogramms erstellte Programmmodule aufgenommen werden. Beispielsweise dasjenige Programmmodul, welches die Zuordnung und die Zuweisungsbedingungen repräsentiert.

Demzufolge wird in einer weiteren Ausgestaltung der Erfindung das Anwenderprogramm unter Verwendung eines auf einem Computer ablaufenden Computerprogramms erstellt, wobei das Erstellen des Anwenderprogrammes durch Auswählen einer Anzahl von Programmmodulen aus einer Vielzahl von vordefinierten Programmmodulen erfolgt, wobei das Computerprogramm ein Anzeigemodul umfasst, das das Anzeigen einer Vielzahl von grafischen Programmmodulsymbolen auf einer an den Computer angeschlossenen Anzeigeeinheit bewirkt, wobei die Vielzahl von grafischen Programmmodulsymbolen eine erste Anzahl von grafischen Programmmodulsymbolen umfasst, die die vordefinierten Programmmodule repräsentieren, und eine zweite Anzahl von grafischen Programmmodulsymbolen umfasst, die die Anzahl von ausgewählten Programmmodulen repräsentieren, wobei zumindest die erste Anzahl von grafischen Programmmodulsymbolen in einer Grunddarstellungsform ausgeführt sind, wobei die Anzahl von vordefinierten Programmmodulen ein während dem Erstellten des Anwenderprogrammes erstelltes Programmmodul umfasst, welches die Zuordnung und die Zuweisungsbedingung repräsentiert, wobei das erstellte Programmmodul durch zumindest ein modifiziertes grafisches Programmmodulsymbol repräsentiert wird, wobei das Anzeigemodul bewirkt, dass das modifizierte grafische Programmmodulsymbol in einer gegenüber der Grunddarstellungsform modifizierten Darstellungsform angezeigt wird.

Durch diese Maßnahme wird der Ersteller eines Anwenderprogrammes zuverlässig auf diejenigen Umfänge des Anwenderprogramms hingewiesen, die auf die Umwandelung zurückgehen und die neben den Umfängen des Anwenderprogramms, die die eigentlichen Sicherheitsaufgaben repräsentieren hinsichtlich der Fehlersicherheit relevant sind. Wobei die die Umwandlung betreffenden Umfänge besonders zu beobachten sind, da hier im ersten Programmteil Programmvariablen verwendet werden, die auf nicht-sicherheitsrelevante Programmvariablen zurückgehen. Was den Umfang der modifizierten grafischen Programmmodulsymbole angeht, so ist denkbar, lediglich dasjenige Platzhaltersymbol zu modifizieren, durch welches dasjenige Programmmodul repräsentiert wird, welches die Zuordnung und die Zuweisungsbedingung repräsentiert. Ergänzend können sämtliche im Anwenderprogramm erstellten Funktionsblöcke, die dieses Programmmodul repräsentieren, ebenfalls modifiziert werden. Vorteilhafterweise wird auch bei dieser Ausgestaltung der erste Codeanteil erkannt.

Vorteilhafterweise wird das modifizierte grafische Programmmodulsymbol verwendet, wenn für das erstellte Programmmodul erkannt wird, dass es sowohl einen ersten Codeanteil als auch einen zweiten Codeanteil umfasst. Durch die Verwendung eines modifizierten grafischen Programmmodulsymbols wird der Ersteller eines Anwenderprogramms auf eine potenzielle Wandelungsstelle aufmerksam gemacht. Werden sämtliche im Anwenderprogramm erstellten Funktionsblöcke modifiziert, die besagtes Programmmodul repräsentieren, bewirkt dies eine Markierung der konkreten Wandelungsstellen. Auch beim Erstellen des Anwenderprogramms mittels textueller Eingabe führt das Markieren zu einer Hervorhebung der konkreten Wandelungsstellen.

In einer weiteren Ausgestaltung der Erfindung wird beim Ausführen des Anwenderprogrammes ausgehend von der ausgewählten ersten nicht-sicherheitsrelevanten Programmvariablen eine duplizierte nicht-sicherheitsrelevante Programmvariable erzeugt.

Diese Ausgestaltung besitzt den Vorteil, dass für jeden der beiden Bearbeitungskanäle, die für eine fehlersichere Verarbeitung von sicherheitsrelevanten Programmvariablen in einer Sicherheitssteuerung vorhanden sein müssen, eine eigenständige nicht-sicherheitsrelevante Programmvariable zur Verfügung gestellt wird, die jeweils eigenständig in eine sicherheitsrelevante Programmvariable umgewandelt wird.

Die duplizierte nicht-sicherheitsrelevante Programmvariable wird vorteilhafterweise dadurch erzeugt, dass der Momentanwert der ausgewählten ersten nicht-sicherheitsrelevanten Programmvariablen in zwei eigenständige Speicherbereiche eingelesen wird, von denen einer für die nicht-sicherheitsrelevante Programmvariable und einer für die duplizierte nicht-sicherheitsrelevant Programmvariable vorgesehen ist.

Vorteilhafterweise wird die duplizierte nicht-sicherheitsrelevante Programmvariable selbsttätig durch das Computerprogramm erzeugt, welches für das Erstellen des Anwenderprogramms verwendet wird. Der Ersteller des Anwenderprogrammes hat außer den Handlungen, die üblicherweise für das Erstellen eines Anwenderprogrammes vorzunehmen sind, keine zusätzlichen Handlungen vorzunehmen.

Das selbsttätige Erzeugen der duplizierten nicht-sicherheitsrelevanten Programmvariablen läuft vorteilhafterweise wie folgt ab: Mit dem Anzeigemodul wird ein Quellcode für das Anwenderprogramm erstellt. Bei Vorliegen eines erkannten Codeanteils erzeugt das Erkennungsmodul einen Duplizierungscode, der in den Quellcode eingefügt wird. Aufgrund dieses Duplizierungscodes wird dann beim Ausführen des Anwenderprogramms die duplizierte nicht-sicherheitsrelevante Programmvariable selbsttätig ausgehend von der ausgewählten ersten nicht-sicherheitsrelevanten Programmvariablen erzeugt. Es ist aber auch eine Realisierungsform denkbar, bei der eine explizite Erstellung eines Duplizierungscodes nicht erforderlich ist. In diesem Fall ist in der auf der Sicherheitssteuerung laufenden Firmware eine Routine hinterlegt, die selbsttätig eine Duplizierung durchführt bzw. die hierfür erforderlichen Anweisungen anlegt, wenn aufgrund einer Zuordnung eine nicht-sicherheitsrelevante Programmvariable in dem ersten Programmteil verarbeitet werden soll.

In einer weiteren Ausgestaltung der zuvor genannten Maßnahme wird sowohl für die ausgewählte erste nicht-sicherheitsrelevante Programmvariable als auch für die duplizierte nicht-sicherheitsrelevante Programmvariable die Zuweisungsbedingung abgearbeitet.

Es ist somit folgende Reihenfolge festgelegt: In einem ersten Schritt wird die duplizierte nicht-sicherheitsrelevante Programmvariable erzeugt. In einem zweiten Schritt wird dann für beide Programmvariablen überprüft, ob jeweils eine für sicherheitsrelevante Programmvariablen geforderte Zuverlässigkeitsanforderung erfüllt ist. Durch diese Bearbeitungsreihenfolge können beim Duplizieren auftretende Fehler erkannt werden, was zur Erhöhung der Fehlersicherheit beiträgt.

In einer weiteren Ausgestaltung der Erfindung handelt es sich bei der ausgewählten ersten nicht-sicherheitsrelevanten Programmvariablen um eine Programmeingangsvariable, wobei der Momentanwert, der der Programmeingangsvariablen zugewiesen wird, einen Wert eines Sensorsignals repräsentiert, welches mit einem nicht-fehlersicher ausgebildeten Sensor erzeugt wird.

Diese Maßnahme besitzt den Vorteil, dass Sicherheitsaufgaben unter Verwendung kostengünstiger, nicht-fehlersicher ausgebildeter Sensoren erledigt werden können. Der Einsatz eines teuren, fehlersicher ausgebildeten Sensors ist nicht zwingend erforderlich. Dies ermöglicht eine kostengünstige Realisierung von Sicherheitssteuerungen.

Vorzugsweise wird auch der Momentwert der ausgewählten weiteren Programmvariablen unter Verwendung eines nicht-fehlersicher ausgebildeten Sensors bereitgestellt. Vorzugsweise handelt es sich bei dem nicht-fehlersicher ausgebildeten Sensor um solch einen, mit dem eine physikalische Größe erfasst wird, die im Rahmen der von der Sicherheitssteuerung zu erledigenden Standardaufgaben benötigt wird. Dies hat den Vorteil, dass neben den Sensoren, die für die Erledigung der Standardaufgaben benötigt werden, keine weiteren Sensoren eingesetzt werden müssen. Die Sicherheitssteuerung lässt sich somit kostengünstig realisieren.

Wie bereits vorstehend ausgeführt, kann es sich sowohl bei der ausgewählten ersten nicht-sicherheitsrelevanten Programmvariablen als auch bei der ausgewählten weiteren Programmvariablen jeweils um eine Programmeingangsvariable handeln. Alternativ kann es sich bei diesen beiden Programmvariablen auch jeweils um eine Programmzwischenvariable handeln. Der Momentanwert einer Programmzwischenvariable wird beispielsweise in Abhängigkeit des Momentanwerts einer Programmeingangsvariablen ermittelt. Bei den beiden Programmvariablen kann es sich aber auch jeweils um eine Programmausgangsvariable handeln. Der Momentanwert einer Programmausgangsvariable wird beispielsweise in Abhängigkeit des Momentanwerts einer Programmeingangsvariablen oder des Momentanwerts einer Programmzwischenvariablen ermittelt, und repräsentiert den Wert eines Steuerungsausgangssignals, mit dem ein Aktor angesteuert wird. Bei der ausgewählten ersten nicht-sicherheitsrelevanten Programmvariablen und der ausgewählten weiteren Programmvariable muss es sich nicht zwangsläufig um dieselbe Art von Programmvariablen handeln. Es kann auch eine der denkbaren Kombinationen vorliegen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Vorteilhafterweise kann die ausgewählte sicherheitsrelevante Programmvariable als Zwischengröße verwendet werden, in deren Abhängigkeit beispielsweise ein sicherheitsrelevantes Steuerungsausgangssignal ermittelt wird.

In den vorstehenden und in den nachfolgenden Ausführungen wird der Begriff Anwenderprogramm so verstanden, dass ein Anwenderprogramm sowohl Quellcode als auch Maschinencode umfasst und somit repräsentiert. Oder anders formuliert: das Anwenderprogramm wird durch den Quellcode und den Maschinencode dargestellt.

Ferner sei erwähnt, dass die Begriffe nicht-sicherheitsrelevant und prozessrelevant vorstehend und nachfolgend synonym verwendet werden.

Ausführungsbeispiele der Erfindung sind in der Zeichnung dargestellt und werden in der nachfolgenden Beschreibung näher erläutert. Es zeigen:
- Fig. 1: eine schematische Darstellung der neuen Vorrichtung in Verbindung mit einer Sicherheitssteuerung, für die ein Anwenderprogramm zu erstellen ist;
- Fig. 2: ein vereinfachtes Flussdiagramm zur Erläuterung des neuen Verfahrens;
- Fig. 3: eine vereinfachte Darstellung einer ersten grafischen Oberfläche für das Erstellen eines Anwenderprogrammes; und
- Fig. 4: eine vereinfachte Darstellung einer zweiten grafischen Oberfläche für das Erstellen eines Anwenderprogrammes.

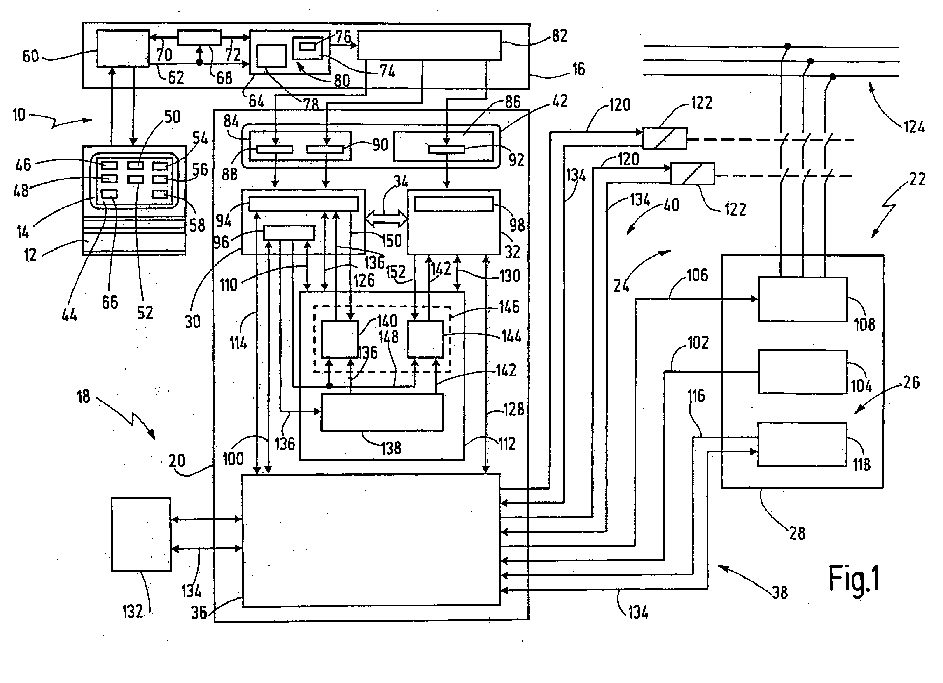

In Fig. 1 ist eine erfindungsgemäße Vorrichtung in ihrer Gesamtheit mit der Bezugsziffer 10 bezeichnet.

Die Vorrichtung 10 beinhaltet einen herkömmlichen Computer 12 mit einer Anzeigeeinheit 14, auf dem ein Computerprogramm 16 ausgeführt wird. Das Computerprogramm 16 ermöglicht das Erstellen eines Anwenderprogrammes für eine Sicherheitssteuerung. Es wird in der Fachterminologie daher häufig auch als Programmiertool bezeichnet. Der Computer 12 kann als PC und die Anzeigeeinheit 14 kann als Monitor ausgeführt sein.

In Fig. 1 ist eine in ihrer Gesamtheit mit der Bezugsziffer 18 bezeichnete Sicherheitsschaltung dargestellt, die eine Sicherheitssteuerung 20 aufweist, die dazu ausgebildet ist, eine in ihrer Gesamtheit mit der Bezugsziffer 22 bezeichnete automatisierte Anlage zu steuern. Die automatisierte Anlage 22 umfasst eine Vielzahl von Aktoren 24 und eine Vielzahl von Sensoren 26. Exemplarisch ist ein in der Anlage 22 enthaltener Verbraucher 28 dargestellt, bei dem es sich beispielsweise um einen Roboter handeln kann.

Die Sicherheitssteuerung 20 ist zweikanalig-redundant aufgebaut, um die erforderliche Fehlersicherheit zum Steuern sicherheitskritischer Prozesse zu erreichen. Stellvertretend für den zweikanaligen Aufbau sind in Fig. 1 zwei voneinander getrennte Prozessoren, nämlich ein erster Prozessor 30 und ein zweiter Prozessor 32 dargestellt. Die beiden Prozessoren 30,32 stehen über eine bidirektionale Kommunikationsschnittstelle 34 miteinander in Verbindung, um sich gegenseitig kontrollieren und Daten austauschen zu können. Bevorzugt sind die beiden Kanäle der Sicherheitssteuerung 20 und die beiden Prozessoren 30, 32 diversitär, d.h. verschieden voneinander aufgebaut, um systematische Fehler weitgehend auszuschließen.

Mit der Bezugsziffer 36 ist eine Ein-/Ausgabeeinheit bezeichnet, die mit jedem der beiden Prozessoren 30, 32 in Verbindung steht. Die Ein-/Ausgabeeinheit 36 nimmt eine Vielzahl von Steuerungseingangssignalen 38 von der Vielzahl von Sensoren 26 auf und leitet diese in einem angepassten Datenformat an jeden der beiden Prozessoren 30, 32 weiter. Unter der Annahme, dass es sich bei den Steuerungseingangssignalen um analoge Signale handelt, werden die analogen Werte der Steuerungseingangssignale durch eine A/D-Wandlung in digitale Werte gewandelt, die dann als Momentanwerte Programmeingangsvariablen zugewiesen werden. Ferner erzeugt die Ein-/ Ausgabeeinheit 36 in Abhängigkeit von den Prozessoren 30, 32 eine Vielzahl von Steuerungsausgangssignalen 40, mit denen die Vielzahl von Aktoren 24 angesteuert werden. Unter der Annahme, dass es sich bei den Steuerungsausgangssignalen um analoge Signale handelt, werden hierzu digital vorliegende Momentanwerte von Programmausgangsvariablen mittels einer D/A-Wandlung in analoge Werte gewandelt, die dann die Werte der Steuerungsausgangssignale darstellen.

Mit der Bezugsziffer 42 ist ein Programmspeicher bezeichnet, in dem ein Anwenderprogramm in Form von Maschinencode abgespeichert wird. Das Anwenderprogramm und somit der Maschinencode wird mit Hilfe der Vorrichtung 10 erstellt. Ist der Programmspeicher 42 als Chipkarte ausgebildet, ermöglicht dies einen einfachen Austausch des Maschinencodes und somit des Anwenderprogrammes auch ohne direkten Anschluss an den Computer 12. Alternativ kann der Programmspeicher 42 auch als ein in der Sicherheitssteuerung 20 fest eingebauter Speicher, beispielsweise einem EEPROM, ausgebildet sein.

Das Computerprogramm 16 stellt auf dem Anzeigeeinheit 14 eine Benutzeroberfläche 44 bereit. Die Benutzeroberfläche 44 ermöglicht einem Programmierer bzw. Ersteller das Erstellen eines Anwenderprogrammes. Der Programmierer erstellt das Anwenderprogramm dadurch, dass er dem Computer 12 über eine an diesen angeschlossene Eingabeeinheit Eingaben zuführt. Bei der Eingabeeinheit kann es sich beispielsweise um eine Tastatur oder eine Maus handeln. In Abhängigkeit derjenigen Programmiersprache, die für das Erstellen des Anwenderprogrammes verwendet wird, unterscheiden sich die Eingabekonzepte. Wird als Programmiersprache beispielsweise die Programmsprache Structured Text verwendet, so wird das Anwenderprogramm durch textuelle Eingaben erstellt. Wird dagegen Function Block Diagram als Programmiersprache verwendet, so erstellt der Programmierer das Anwenderprogramm dadurch, dass er vordefinierte Programmmodule, die beispielsweise auf der Benutzeroberfläche 44 mittels graphischer Symbole repräsentiert werden, unter Verwendung einer Maus auswählt.

Unabhängig von der zum Einsatz kommenden Programmiersprache sind gemäß dem neuen Verfahren verschiedene vom Programmierer vorzunehmende Eingaben erforderlich. Diese Eingaben umfassen das Definieren einer Anzahl von sicherheitsrelevanten Programmvariablen 46, das Definieren einer Anzahl von nicht-sicherheitsrelevanten Programmvariablen 48, das Auswählen einer sicherheitsrelevanten Programmvariablen 50 aus der Anzahl von sicherheitsrelevanten Programmvariablen 46, das Auswählen einer ersten nicht-sicherheitsrelevanten Programmvariablen 52 aus der Anzahl von nicht-sicherheitsrelevanten Programmvariablen 48, das Definieren einer Zuweisungsbedingung 54, das Definieren einer Zuordnung 56 und das Erstellen von Steueranweisungen 58. Die Zuordnung 56 entspricht programmiertechnisch einer Zuweisung, mit der die ausgewählte erste nicht-sicherheitsrelevante Programmvariable 52 der ausgewählten sicherheitsrelevanten Programmvariablen 50 zugewiesen wird. Beim Ausführen des Anwenderprogramms werden dadurch die Momentanwerte der nicht-sicherheitsrelevanten Programmvariablen der sicherheitsrelevanten Programmvariablen zugewiesen. Die Zuordnung hat den Charakter eines Mappings.

Das Computerprogramm 16 umfasst ein Anzeigemodul 60. Mit dem Anzeigemodul 60 werden die vom Programmierer über die Eingabeeinheit vorgenommenen Eingaben erfasst und ausgewertet. Zum einen erzeugt das Anzeigemodul 60 einen die jeweilige Eingabe repräsentierenden Quellcode 62, der in einem Quellcodespeicher 64 abgelegt wird. Bezogen auf einen vollständigen Quellcode, der vorliegt, nachdem der Ersteller seine Eingaben vorgenommen hat, handelt es sich bei dem Quellcode 62 um einen Quellcodeumfang. Zum anderen bewirkt das Anzeigemodul 60 das Anzeigen bzw. Darstellen von graphischen Symbolen 66 in einer Grunddarstellungsform. Die graphischen Symbole 66 repräsentieren die vom Programmierer vorgenommenen Eingaben und somit auch den vom Anzeigemodul 60 erzeugten Quellcode 62. Somit ist es möglich, das Anwenderprogramm bzw. den Quellcode für das Anwenderprogramm auf der Anzeigeeinheit 14 darzustellen.

Das Computerprogramm 16 umfasst ferner ein Erkennungsmodul 68, in welchem der Quellcode 62 ausgewertet wird. Der insgesamt vom Anzeigemodul 60 erzeugte Quellcode enthält einen Wandelungscode, der einen ersten Codeanteil und einen zweiten Codeanteil umfasst. Der erste Codeanteil repräsentiert die Zuordnung 56 und der zweite Codeanteil repräsentiert die Zuweisungsbedingung 54. Wird nun von dem Erkennungsmodul 68 der erste Codeanteil erkannt, so wird zum einen dem Anzeigemodul 60 eine Erkennungsmitteilung 70 zugeführt. Ausgehend von der Erkennungsmitteilung 70 bewirkt das Anzeigemodul 60, dass zumindest eines der graphischen Symbole 66 in einer gegenüber der Grunddarstellungsform modifizierten Darstellungsform dargestellt wird. Zum anderen erzeugt das Erkennungsmodul 68 einen Duplizierungscode 72. Der Duplizierungscode 72 wird dem Quellcodespeicher 64 zugeführt und somit in Quellcode eingefügt. Dabei sind verschiedene Ausgestaltungen denkbar. Bei dem Duplizierungscode 72 kann es sich um einen eigenständigen Programmteil handeln, der unabhängig von dem ersten Programmteil 74 und dem zweiten Programmteil 78 besteht. Der Duplizierungscode 72 kann aber auch Teil des ersten Programmteils 74 oder Teil des zweiten Programmteils 78 sein.

Wenn der Programmierer sämtliche für sein Anwenderprogramm benötigten Eingaben vorgenommen hat, liegt der Quellcode vollständig in dem Quellcodespeicher 64 vor. Der Quellcode umfasst einen ersten Programmteil 74, in dem sicherheitsrelevante Programmvariablen fehlersicher verarbeitet werden. Der erste Programmteil 74 wiederum umfasst ein Programmmodul 76, zu dem der erste Codeanteil und der zweite Codeanteil zusammengefasst sind. Aufgrund der mit dem Programmmodul 76 verbundenen Funktionalität kann das Programmmodul 76 als Wandelungsmodul bezeichnet werden. Zudem umfasst der Quellcode einen zweiten Programmteil 78, in dem nicht-sicherheitsrelevante Programmvariablen verarbeitet werden, wobei für die nicht-sicherheitsrelevanten Programmvariablen innerhalb des zweiten Programmteils 78 eine fehlersichere Verarbeitung nicht erforderlich ist. Der erste Programmteil 74 umfasst denjenigen Quellcode, der die Sicherheitsanweisungen repräsentiert, die für die von der Sicherheitssteuerung 20 zu erledigenden Sicherheitsaufgaben erforderlich sind. Die Sicherheitsanweisungen umfassen nicht nur Sicherheitssteuerungsanweisungen, sondern auch Wandelungsanweisungen, wobei die Wandelungsanweisungen die Zuordnung 56 und die Zuweisungsbedingung 54 repräsentieren. Die Wandelungsanweisungen sind zu dem Programmmodul 76 zusammengefasst. Die in dem Programmmodul 76 zusammengefassten Wandelungsanweisungen sind eigenständig gegenüber den eigentlichen Sicherheitssteuerungsanweisungen. Der zweite Programmteil 78 umfasst denjenigen Quellcode, der die Standardanweisungen repräsentiert, die für die von der Sicherheitssteuerung 20 zu erledigenden Standardaufgaben erforderlich sind.

Der in den Quellcodespeicher 64 abgespeicherte vollständige Quellcode 80 wird mittels eines Compilers 82 in Maschinencode übersetzt. Bevorzugt wird er zusätzlich mit einer CRC (Cyclic Redundancy Check) abgesichert.

Der vom Compiler 82 übersetzte Maschinencode wird im Programmspeicher 42 abgespeichert. Für ein fehlersicheres Verarbeiten von sicherheitsrelevanten Programmvariablen sind im Programmspeicher 42 ein erster Maschinencode 84 und ein zweiter Maschinencode 86 abgespeichert. Der erste Maschinencode 84 ist für den ersten Prozessor 30 und der zweite Maschinencode 86 ist für den zweiten Prozessor 32 bestimmt. Der erste Maschinencode 84 umfasst einen ersten Sicherheitscode 88 und einen Standardcode 90. Der erste Sicherheitscode 88 umfasst zum einen diejenigen Sicherheitsanweisungen, die vom ersten Prozessor 30 im Rahmen der von der Sicherheitssteuerung 20 zu erledigenden Sicherheitsaufgaben abzuarbeiten sind. Zum anderen umfasst der erste Sicherheitscode 88 diejenigen Sicherheitsanweisungen, die vom ersten Prozessor 30 im Rahmen der Umwandlung, die durch die Zuordnung 56 und die Zuweisungsbedingung 54 definiert ist, abzuarbeiten sind. Insgesamt umfasst der erste Sicherheitscode 88 somit Sicherheitssteuerungsanweisungen und Wandelungsanweisungen. Der Standardcode 90 umfasst diejenigen Standardanweisungen, die vom ersten Prozessor 30 im Rahmen der von der Sicherheitssteuerung 20 zu erledigenden Standardaufgaben abzuarbeiten sind. Der zweite Maschinencode 86 umfasst einen zweiten Sicherheitscode 92. Entsprechend den Ausführungen zum ersten Sicherheitscode 88 umfasst der zweite Sicherheitscode 92 diejenigen Sichterheitsanweisungen, d.h. Sicherheitssteuerungsanweisungen und Wandelungsanweisungen, die vom zweiten Prozessor 32 abzuarbeiten sind. Das vom Programmierer erstellte Anwenderprogramm umfasst den vollständigen Quellcode 80 und die beiden Maschinencodes 84, 86.

In Abhängigkeit des Bearbeitungsfortganges des Anwenderprogramms wird in dem ersten Prozessor 30 zum einen eine erste aktuelle Sicherheitsanweisung 94 und zum anderen eine aktuelle Standardanweisung 96 abgearbeitet. Im Wesentlichen zeitgleich wird in dem zweiten Prozessor 32 eine zweite aktuelle Sicherheitsanweisung 98 abgearbeitet. Sowohl bei der ersten aktuellen Sicherheitsanweisung 94 als auch bei der zweiten aktuellen Sicherheitsanweisung 98 kann es sich um eine Sicherheitssteuerungsanweisung oder um eine Wandelungsanweisung handeln.

Im Rahmen der Bearbeitung der aktuellen Standardanweisung 96, bei der es sich um eine Standardsteuerungsanweisung und somit um eine nicht-sicherheitsrelevante Steuerungsanweisung handelt, werden erste nicht-sicherheitsrelevante Daten 100 zwischen dem ersten Prozessor 30 und der Ein-/Ausgabeeinheit 36 ausgetauscht. Hierbei werden dem ersten Prozessor 30 Daten unter Verwendung von Programmeingangsvariablen zugeführt, wobei deren Momentanwerte Werte von nicht-sicherheitsrelevanten Steuerungseingangssignalen 102 repräsentieren, die von nicht-sicherheitsrelevanten Sensoren 104 erzeugt werden. Bei den nicht-sicherheitsrelevanten Sensoren 104 handelt es sich um solche Sensoren, die beispielsweise für eine Antriebsregelung benötigte Eingangsgrößen erfassen. Hierbei kann es sich beispielsweise um Drehzahlen, Winkel oder Geschwindigkeiten handeln. Die nicht-sicherheitsrelevanten Sensoren 104 sind nicht-fehlersicher ausgebildet. Der Ein/Ausgabeeinheit 36 werden Daten unter Verwendung von Programmausgangsvariablen zugeführt, wobei deren Momentanwerte Werte von nicht-sicherheitsrelevanten Steuerungsausgangssignalen 106 repräsentieren, die nicht-sicherheitsrelevanten Aktoren 108 zu deren Ansteuerung zugeführt werden. Bei den nicht-sicherheitsrelevanten Aktoren 108 kann es sich beispielsweise um Motoren oder Stellzylinder handeln. Die Momentanwerte der nicht-sicherheitsrelevanten Programmausgangsvariablen werden in Abhängigkeit der nicht-sicherheitsrelevanten Programmeingangsvariablen gemäß den Standardanweisungen ermittelt. Hierbei kann es erforderlich sein, Zwischengrößen zu ermitteln, deren Momentanwerte Programmzwischenvariablen zugewiesen werden. Die Momentanwerte der Programmzwischenvariablen werden mittels zweiter nicht-sicherheitsrelevanter Daten 110 einem Arbeitsspeicher 112 zugeführt und dort zwischengespeichert.

Handelt es sich bei der ersten aktuellen Sicherheitsanweisung 94 um eine Sicherheitssteuerunganweisung und somit um eine sicherheitsrelevante Steuerungsanweisung, so werden im Rahmen deren Bearbeitung erste sicherheitsrelevante Daten 114 zwischen dem ersten Prozessor 30 und der Ein-/Ausgabeeinheit 36 ausgetauscht. Hierbei werden dem ersten Prozessor 30 Daten unter Verwendung von sicherheitsrelevanten Programmeingangsvariablen zugeführt, wobei deren Momentanwerte Werte von sicherheitsrelevanten Steuerungseingangssignalen 116 repräsentieren, die von sicherheitsrelevanten Sensoren 118 erzeugt werden. Bei den sicherheitsrelevanten Sensoren 118 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Der Ein-/Ausgabeeinheit 36 werden Daten unter Verwendung von sicherheitsrelevanten Programmausgangsvariablen zugeführt, wobei deren Momentanwerte Werte von sicherheitsrelevanten Steuerungsausgangssignalen 120 repräsentieren, die sicherheitsrelevanten Aktoren 122 zu deren Ansteuerung zugeführt werden. Bei den sicherheitsrelevanten Aktoren 122 handelt es sich beispielsweise um sogenannte Schütze, deren Arbeitskontakte in der Verbindung zwischen einer Stromversorgung 124 und dem Verbraucher 28 angeordnet sind. Über die sicherheitsrelevanten Aktoren 122 kann die Stromversorgung 124 des Verbrauchers 28 abgeschaltet werden, wodurch es möglich ist, bei Auftritt einer entsprechenden Fehlfunktion zumindest den Verbraucher 28 in einen sicheren Zustand zu überführen. Die Momentanwerte der sicherheitsrelevanten Programmausgangsvariablen werden in Abhängigkeit der sicherheitsrelevanten Programmeingangsvariablen gemäß den Sicherheitssteuerungsanweisungen ermittelt. Hierbei kann es erforderlich sein, dass sicherheitsrelevante Zwischengrößen ermittelt werden, deren Momentanwerte sicherheitsrelevanten Programmzwischenvariablen zugewiesen werden. Die Momentanwerte der sicherheitsrelevanten Programmzwischenvariablen werden mittels zweiter sicherheitsrelevanter Daten 126 dem Arbeitsspeicher 112 zugeführt und dort zwischengespeichert.

Handelt es sich bei der zweiten aktuellen Sicherheitsanweisung 98 um eine Sicherheitssteuerungsanweisung und somit um eine sicherheitsrelevante Steuerungsanweisung, so wird entsprechend der im ersten Prozessor 30 abgearbeiteten ersten aktuellen Sicherheitsanweisung 94 verfahren. Bezüglich der zweiten aktuellen Sicherheitsanweisung 98 werden dritte sicherheitsrelevante Daten 128, die den ersten sicherheitsrelevanten Daten 114 entsprechen, und vierte sicherheitsrelevante Daten 130, die den zweiten sicherheitsrelevanten Daten 126 entsprechen, in entsprechender Weise verwendet.

Die vorstehenden Ausführungen, gemäß denen sowohl vom ersten Prozessor 30 als auch vom zweiten Prozessor 32 Werte für die sicherheitsrelevanten Steuerungsausgangssignale 120 erzeugt werden, bedeutet nicht, dass die von diesen beiden Prozessoren erzeugten Werte gleichzeitig als Steuerungsausgangssignale 120 ausgegeben werden. Die vorstehenden Ausführungen sollen lediglich den bezüglich der zu erledigenden Sicherheitsaufgaben redundanten Aufbau der Sicherheitssteuerung 20 wiedergeben. Beide Prozessoren 30, 32 sind dazu ausgebildet, Werte für die Steuerungsausgangssignale 120 zu ermitteln. Während des fehlerfreien Betriebs der Sicherheitssteuerung 20 werden lediglich die von einem Prozessor, beispielsweise dem ersten Prozessor 30 ermittelten Werte als Steuerungsausgangssignale 120 ausgegeben.

An die Sicherheitssteuerung 20 können über die Ein-/Ausgabeeinheit 36 weitere. Peripherieeinheiten 132 angeschlossen sein, die im Rahmen der von der Sicherheitssteuerung 20 zu erledigenden Standard- und Sicherheitsaufgaben benötigt werden. Beispielsweise kann es sich hierbei um einen Betriebsartenwahlschalter oder um einen Zustimmtaster handeln. Es kann sich aber auch um eine Anzeigeeinheit handeln.

Über die Ein-/Ausgabeeinheit 36 werden zwischen der Sicherheitssteuerung 20 und den sicherheitsrelevanten Sensoren 118, den sicherheitsrelevanten Aktoren 122 und sofern erforderlich auch den weiteren Peripherieeinheiten 132 Testsignale 134 ausgetauscht. Mit Hilfe der Testsignale 134 kann in der Sicherheitssteuerung 20 festgestellt werden, ob die an sie angeschlossenen Einheiten und Komponenten fehlerfrei arbeiten, was erforderlich ist, da ein sicherer Zustand der zu steuernden Anlage 22 gewährleistet sein muss, sobald an einem mit der Sicherheitssteuerung 20 verbundenen Geräte eine Fehlfunktion auftritt.

Handelt es sich bei der ersten aktuellen Sicherheitsanweisung 94 und bei der zweiten aktuellen Sicherheitsanweisung 98 um eine Wandelungsanweisung, so wird in den beiden Prozessoren 30, 32 einer derjenigen Schritte abgearbeitet, der dafür erforderlich ist, dass ein Momentanwert der ausgewählten ersten nicht-sicherheitsrelevanten Programmvariablen 52 in Abhängigkeit der Zuweisungsbedingung 54 der ausgewählten sicherheitsrelevanten Programmvariablen 50 zugewiesen wird. Hierzu wird ein zu einem definierten Zeitschritt vorliegender ursprünglicher Momentanwert 136 der ausgewählten ersten nicht-sicherheitsrelevanten Programmvariablen 52 einer Dupliziereinheit 138 zugeführt. In der Dupliziereinheit 138 wird ausgehend von der ausgewählten ersten nicht-sicherheitsrelevanten Programmvariablen 52 eine duplizierte nicht-sicherheitsrelevante Programmvariable erzeugt. Hierfür wird der ursprüngliche Momentanwert 136 in zwei getrennte Speicherbereiche eingelesen. Der Übersichtlichkeit halber sind diese beiden Speicherbereiche nicht dargestellt. Die beiden Speicherbereiche werden eigenständig ausgelesen, so dass der ursprüngliche Momentanwert 136 einer ersten Prüfeinheit 140 und ein duplizierter Momentanwert 142 einer zweiten Prüfeinheit 144 zugeführt wird. In der zweiten Prüfeinheit 144 wird somit eine duplizierte nicht-sicherheitsrelevante Programmvariable ausgewertet und somit verarbeitet.

Die beiden Prüfeinheiten 140, 144 bilden zusammen eine Plausibilitätseinheit 146. Die Dupliziereinheit 138 und die Plausibilitätseinheit 146 können zusammengefasst als Wandelungseinheit betrachtet werden. An dieser Stelle sei erwähnt, dass es sich bei der Dupliziereinheit 138, bei den Prüfeinheiten 140, 144 und bei der Plausibilitätseinheit 146 allesamt um funktionelle Einheiten und nicht um strukturelle Einheiten innerhalb des Arbeitsspeichers 112 handelt.

In den beiden Prüfeinheiten 140, 144 wird eigenständig die Zuweisungsbedingung 54 abgearbeitet. In der ersten Prüfeinheit 140 für die ausgewählte erste nicht-sicherheitsrelevante Programmvariable 52 und in der zweiten Prüfeinheit 144 für die duplizierte nicht-sicherheitsrelevante Programmvariable. Somit wird sowohl für die ausgewählte erste nicht-sicherheitsrelevante Programmvariable 52 als auch für die duplizierte nicht-sicherheitsrelevante Programmvariable festgestellt, ob besagte Zuverlässigkeitsanforderung jeweils erfüllt ist.

Für die Zuweisungsbedingung 54 sind zwei Ausführungsformen denkbar. Bei einer ersten Ausführungsform wird als Zuweisungsbedingung eine Plausibilitätsabfrage definiert, mit der überprüft wird, ob die ausgewählte erste nicht-sicherheitsrelevante Programmvariable 52 und eine ausgewählte weitere Programmvariable konsistent zueinander sind. Entsprechend wird geprüft, ob die duplizierte nicht-sicherheitsrelevante Programmvariable und die ausgewählte weitere Programmvariable konsistent zueinander sind. Handelt es sich bei der ausgewählten weiteren Programmvariablen um eine nicht-sicherheitsrelevante Programmvariable, so wird den beiden Prüfeinheiten 140, 144 ein zu dem definierten Zeitschritt vorliegender erster Momentanwert 148 zugeführt. Es handelt sich hierbei um einen Momentanwert einer ausgewählten weiteren nicht-sicherheitsrelevanten Programmvariablen. Wird in der ersten Prüfeinheit 140 festgestellt, dass die ausgewählte erste nicht-sicherheitsrelevante Programmvariable 52 und die ausgewählte weitere nicht-sicherheitsrelevante Programmvariable konsistent zueinander sind, so wird der ursprüngliche Momentanwert 136 der ausgewählten sicherheitsrelevanten Programmvariablen 50 zugewiesen und an den ersten Prozessor 30 ausgegeben. Wird in der zweiten Prüfeinheit 144 festgestellt, dass die duplizierte nicht-sicherheitsrelevante Programmvariable und die ausgewählte weitere nicht-sicherheitsrelevante Programmvariable konsistent zueinander sind, so wird der duplizierte Momentanwert 142 einer der ausgewählten sicherheitsrelevanten Programmvariablen 50 entsprechenden sicherheitsrelevanten Programmvariablen, die im zweiten Sicherheitscode 92 angelegt ist und im zweiten Prozessor 32 verarbeitet wird, zugewiesen und an den zweiten Prozessor 32 ausgegeben.

Handelt es sich dagegen bei der ausgewählten weiteren Programmvariablen um eine sicherheitsrelevante Programmvariable, so wird der ersten Prüfeinheit 140 über fünfte sicherheitsrelevante Daten 150 ein zu dem definierten Zeitschritt vorliegender zweiter Momentanwert zugeführt. Es handelt sich hierbei um einen Momentanwert einer ausgewählten weiteren sicherheitsrelevanten Programmvariablen. Entsprechend wird der zweiten Prüfeinheit 144 über sechste sicherheitsrelevante Daten 152 ein zu dem definierten Zeitschritt vorliegender dritter Momentanwert zugeführt. Es handelt sich hierbei um den Momentanwert einer entsprechenden, im zweiten Sicherheitscode 92 angelegten sicherheitsrelevanten Programmvariable. In der ersten Prüfeinheit 140 wird dann festgestellt, ob die ausgewählte erste nicht-sicherheitsrelevante Programmvariable 52 und die ausgewählte weitere sicherheitsrelevante Programmvariable konsistent zueinander sind. In der zweiten Prüfeinheit 144 wird dann festgestellt, ob die ausgewählte erste nicht-sicherheitsrelevante Programmvariable 52 und die entsprechende, im zweiten Sicherheitscode 92 verwendete sicherheitsrelevante Programmvariable zueinander konsistent sind. Das Zuweisen und Ausgeben des ursprünglichen Momentanwerts 136 und des duplizierten Momentanwerts 144 erfolgt entsprechend dem Fall, dass es sich bei der ausgewählten weiteren Programmvariable um eine nicht-sicherheitsrelevante Programmvariable handelt.

Bei einer zweiten Ausführungsform wird als Zuweisungsbedingung eine Plausibilitätsabfrage definiert, mit der überprüft wird, ob die ausgewählte erste nicht-sicherheits- ' relevante Programmvariable 52 ein Vergleichskriterium erfüllt, wobei das Vergleichskriterium eine charakteristische Eigenschaft der ausgewählten ersten nicht-sicherheitsrelevanten Programmvariablen 52 repräsentiert. In diesem Fall werden der ersten Prüfeinheit 140 mittels den fünften sicherheitsrelevanten Daten 150 Vergleichsdaten zugeführt, mit denen der ursprüngliche Momentanwert 136 verglichen wird. Der zweiten Prüfeinheit 144 werden mittels der sechsten sicherheitsrelevanten Daten 152 entsprechende Vergleichsdaten zugeführt. Wird in der ersten Prüfeinheit 140 festgestellt, dass die ausgewählte erste nicht-sicherheitsrelevante Programmvariable 52 das Vergleichskriterium erfüllt, so wird der ursprüngliche Momentanwert 136 der ausgewählten sicherheitsrelevanten Programmvariablen 50 zugewiesen und an den ersten Prozessor 30 ausgegeben. Wird in der zweiten Prüfeinheit 144 festgestellt, dass die duplizierte nicht-sicherheitsrelevante Programmvariable das Vergleichskriterium erfüllt, so wird der duplizierte Momentanwert 142 einer sicherheitsrelevanten Programmvariablen, die im zweiten Sicherheitscode angelegt ist und der ausgewählten sicherheitsrelevanten Programmvariablen 50 entspricht, zugewiesen und an den zweiten Prozessor 32 ausgegeben.

Sind für das Prüfen der Zuweisungsbedingung 54 in den beiden Prüfeinheiten 140, 144 mehrere Momentanwerte oder zeitliche Änderungen der Momentanwerte auszuwerten, so werden in den beiden Prüfeinheiten 140, 144 die für mehrere aufeinander folgende Zeitschritte vorliegenden Momentanwerte zwischengespeichert.

In Fig. 1 ist eine erste Ausführungsform beschrieben, bei der sowohl der erste Sicherheitscode 88 als auch der zweite Sicherheitscode 92 die Wandelungsanweisungen enthält. Dies soll keine einschränkende Wirkung haben. Es ist auch eine Ausführungsform denkbar, bei der lediglich der erste Sicherheitscode 88 die Wandelungsanweisungen enthält und der zweite Sicherheitscode 92 nicht. Auch ist eine Ausführungsform denkbar, bei der in einem oder beiden Sicherheitscodes lediglich diejenigen Wandelungsanweisungen enthalten sind, die die Zuweisungsbedingung 54 repräsentieren. Was den Duplizierungscode 72 angeht, so sind ebenfalls mehrere Ausführungsformen denkbar. Es ist denkbar, dass lediglich in dem ersten Sicherheitscode 88 zugehörige Anweisungen enthalten sind. Es können aber auch in beiden Sicherheitscodes 88, 92 zugehörige Anweisungen enthalten sein.

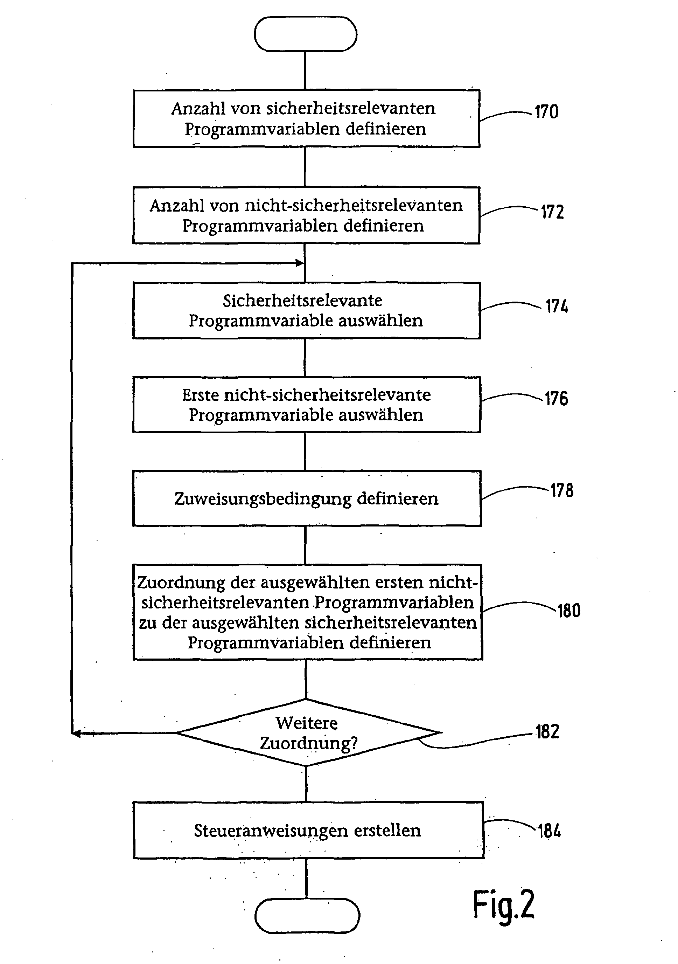

Das in Fig. 2 dargestellte Flussdiagramm zeigt die prinzipielle Vorgehensweise beim Erstellen eines Anwenderprogramms gemäß dem neuen Verfahren.

Gemäß Schritt 170 wird eine Anzahl von sicherheitsrelevanten Programmvariablen 46 definiert. In einem nächsten Schritt 172 wird eine Anzahl von nicht-sicherheitsrelevanten Programmvariablen 48 definiert. In einem darauffolgenden Schritt 174 wird eine sicherheitsrelevante Programmvariable 50 aus der Anzahl von sicherheitsrelevanten Programmvariablen 46 ausgewählt. In einem nachfolgenden Schritt 176 wird eine erste nicht-sicherheitsrelevante Programmvariable 52 aus der Anzahl von nicht-sicherheitsrelevanten Programmvariablen 48 ausgewählt. Der ausgewählten ersten nicht-sicherheitsrelevanten Programmvariablen 52 wird beim Ausführen des Anwenderprogrammes wiederholt ein Momentanwert zugewiesen. In einem darauffolgenden Schritt 178 wird eine Zuweisungsbedingung 54 definiert, die beim Ausführen des Anwenderprogrammes abgearbeitet wird. In dem Schritt 178 wird für den Fall, dass als Zuweisungsbedingung eine Plausibilitätsabfrage definiert wird, zusätzlich eine weitere Programmvariable ausgewählt. In einem sich anschließenden Schritt 180 wird eine Zuordnung 56 definiert, die die ausgewählte erste nicht-sicherheitsrelevante Programmvariable 52 der ausgewählten sicherheitsrelevanten Programmvariablen 50 zuordnet. Beim Ausführen des Anwenderprogrammes wird der Momentanwert der ausgewählten ersten nicht-sicherheitsrelevanten Programmvariablen 52 in Abhängigkeit der Zuweisungsbedingung 54 der ausgewählten sicherheitsrelevanten Programmvariablen 50 zugewiesen. Soll eine weitere nicht-sicherheitsrelevante Programmvariable in eine sicherheitsrelevante Programmvariable umgewandelt werden, d.h. eine weitere Zuordnung vorgenommen werden, was in einem nachfolgenden Schritt 182 festgestellt wird, so werden die Schritte 174 bis 180 erneut ausgeführt. Soll dagegen keine weitere Umwandlung und somit Zuordnung vorgenommen werden, so wird anschließend an den Schritt 182 ein Schritt 184 ausgeführt. In dem Schritt 184 werden Steuerungsanweisungen erstellt.

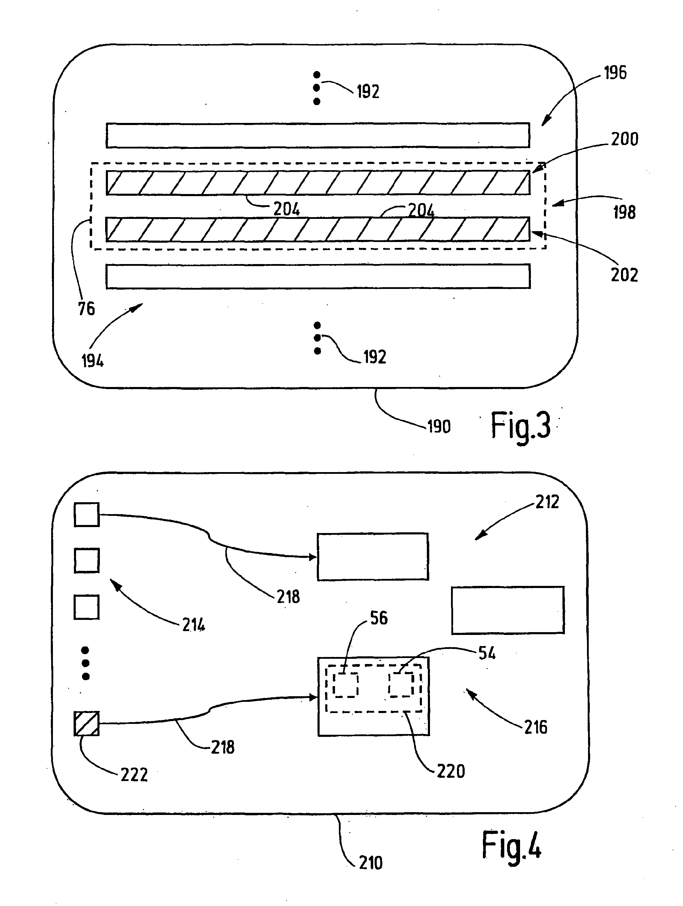

In Fig. 3 ist eine erste grafische Benutzeroberfläche 190 dargestellt, die ein erstes Programmierkonzept repräsentiert. Insgesamt wird das Anwenderprogramm unter Verwendung eines auf dem Computer 12 ablaufenden Computerprogramms 16 erstellt. Die erste grafische Benutzeroberfläche 190 ermöglicht es dabei einem Programmierer, für das Erstellen eines Anwenderprogramms erforderliche textuelle Eingaben vorzunehmen. Das von dem Computerprogramm 16 umfasste Anzeigemodul 60 bewirkt, dass während des Erstellens des Anwenderprogramms zumindest der Quellcode 62 oder zumindest auszugsweise ein Teil des vollständigen Quellcodes 80 auf der an den Computer 12 angeschlossenen Anzeigeeinheit 14 angezeigt wird. In den nachfolgenden Ausführungen wird vereinfachend ein Auszug eines Quellcodes betrachtet.

In Fig. 3 ist der Auszug des Quellcodes und somit des Anwenderprogramms dargestellt, was durch Fortsetzungspunkte 192 und eine Anzahl von Rechtecken 194 angedeutet ist, wobei jedes der Rechtecke eine Programmzeile des Quellcodes und somit des Anwenderprogrammes repräsentiert. Insgesamt umfasst die auf der Anzeigeeinheit 14 dargestellte erste grafische Benutzeroberfläche 190 eine Vielzahl von den Quellcode repräsentierender grafischer Quellcodesymbole 196. Die grafischen Quellcodesymbole sind dabei in einer Grunddarstellungsform ausgeführt. Die Vielzahl von grafischen Quellcodesymbolen 196 umfasst eine Anzahl von grafischen Wandelungscodesymbolen 198. Die Anzahl von grafischen Wandelungscodesymbolen 198 repräsentiert einen in dem Quellcode enthaltenen Wandelungscode. Der Wandelungscode wiederum umfasst einen ersten Codeanteil 200, der die Zuordnung 56 repräsentiert und einen zweiten Codeanteil 202, der die Zuweisungsbedingungen 54 repräsentiert. Mittels des Erkennungsmoduls 68 wird zumindest einer der beiden Codeanteile 200, 202 erkannt. Bei Vorliegen eines erkannten Codeanteils bewirkt das Anzeigemodul 60, dass zumindest ein grafisches Wandelungscodesymbol 204, welches in der Anzahl von grafischen Wandelungscodesymbolen 198 enthalten ist, in einer gegenüber der Grunddarstellungsform modifizierten Darstellungsform dargestellt wird. Dies ist in Fig. 3 dadurch angedeutet, dass die beiden mit der Bezugsziffer 204 bezeichneten Rechtecke mit einer Schraffur versehen sind.

Der erste Codeanteil 200 repräsentiert Wandelungsanweisungen, die die Zuordnung 56 repräsentieren. Der zweite Codeanteil 202 repräsentiert Wandelungsanweisungen, die die Zuweisungsbedingung 54 repräsentieren. Wie in Fig. 3 durch einen in Strichlinien dargestellten Block angedeutet, sind die beiden Codeanteile 200, 202 zu dem Programmmodul 76 zusammengefasst.

Durch die Darstellung zumindest eines grafischen Wandelungssymbols 204 in einer gegenüber der Grunddarstellungsform modifizierten Darstellungsform wird innerhalb des Quellcodes und somit innerhalb des Anwenderprogramms eine detektierte Wandelungsstelle geschaffen.

In Fig. 4 ist eine zweite grafische Benutzeroberfläche 210 dargestellt, die ein zweites Programmierkonzept repräsentiert. Auch bei diesem zweiten Programmierkonzept wird das Anwenderprogramm unter Verwendung eines auf dem Computer 12 ablaufenden Computerprogramms 16 erstellt. Bei diesem zweiten Programmierkonzept erfolgt das Erstellen des Anwenderprogrammes jedoch durch Auswählen einer Anzahl von Programmmodulen aus einer Vielzahl von vordefinierten Programmmodulen. Um diese Auswahl vornehmen zu können, bewirkt das Anzeigemodul 60 das Anzeigen einer Vielzahl von grafischen Programm modul symbolen 212 auf der zweiten grafischen Benutzeroberfläche 210 und somit der Anzeigeeinheit 14. Die Vielzahl von grafischen Programmmodulsymbolen 212 umfasst wiederum eine erste Anzahl von grafischen Programmmodulsymbolen 214, die die vordefinierten Programmmodule repräsentieren, und eine zweite Anzahl von grafischen Programmmodulsymbolen 216, die die Anzahl von ausgewählten Programmmodulen repräsentieren. Das Auswählen von vordefinierten Programmmodulen erfolgt beispielsweise unter Verwendung einer Maus mittels einer Drag & Drop-Funktion und ist in Fig. 4 mittels zweier Pfeile 218 angedeutet. Zumindest die erste Anzahl von grafischen Programmmodulsymbolen 214 ist in einer Grunddarstellungsform ausgeführt. Die Anzahl von vordefinierten Programmmodulen umfasst ein während des Erstellens des Anwenderprogramms erstelltes Programmmodul 220, welches die Zuordnung 56 und die Zuweisungsbedingung 54 repräsentiert. Das erstellte Programmmodul 220 wird durch zumindest ein modifiziertes grafisches Programmmodulsymbol 222 repräsentiert. Das Anzeigemodul 60 bewirkt, dass das modifizierte grafische Programmmodulsymbol 222 in einer gegenüber der Grunddarstellungsform modifizierten Darstellungsform angezeigt wird. Dies ist in Fig. 4 durch Verwendung einer Schraffur angedeutet. Das erstellte Programmmodul 220 entspricht dem zuvor beschriebenen Programmmodul 76.

Das Erstellen eines Programmmoduls stellt sich bei dem zweiten Programmierkonzept wie folgt dar: In einem eigens hierfür vorgesehenen Eingabefeld legt der Programmierer die Funktionalität des zu erstellenden Programmmoduls fest. Hierzu gibt der Programmierer beispielsweise in Form textueller Eingaben diejenigen Steuerungsanweisungen ein, die von dem zu erstellenden Programmmodul auszuführen sind. In diesem Stadium wird für das zu erstellende Programmmodul ein grafisches Programmmodulsymbol bereits angelegt. Erkennt nun das Erkennungsmodul. 68 innerhalb der vom Programmierer eingegebenen Steuerungsanweisungen einen der beiden Codeanteile 200, 202, so wird das bereits angelegte grafische Programmmodulsymbol modifiziert, wodurch es in einer gegenüber der Grunddarstellungsform modifizierten Darstellungsform angezeigt wird.

## Patentansprüche

1. Verfahren zum Erstellen eines Anwenderprogrammes für eine Sicherheitssteuerung (20), die dazu ausgebildet ist, eine automatisierte Anlage (22) mit einer Vielzahl von Sensoren (26) und einer Vielzahl von Aktoren (24) zu steuern, wobei das Anwenderprogramm einen ersten Programmteil (74) umfasst, in dem sicherheitsrelevante Programmvariablen fehlersicher verarbeitet werden, und zumindest einen zweiten Programmteil (78) umfasst, in dem nicht-sicherheitsrelevante Programmvariablen verarbeitet werden, wobei für die nicht-sicherheitsrelevanten Programmvariablen innerhalb des zweiten Programmteils (78) eine fehlersichere Verarbeitung nicht erforderlich ist, **gekennzeichnet durch** folgende Schritte:
- Definieren einer Anzahl von sicherheitsrelevanten Programmvariablen (46),
- Definieren einer Anzahl von nicht-sicherheitsrelevanten Programmvariablen (48),
- Auswählen einer sicherheitsrelevanten Programmvariablen (50) aus der Anzahl von sicherheitsrelevanten Programmvariablen (46),
- Auswählen einer ersten nicht-sicherheitsrelevanten Programmvariablen (52) aus der Anzahl von nicht-sicherheitsrelevanten Programmvariablen (48), wobei der ersten nicht-sicherheitsrelevanten Programmvariablen (52) beim Ausführen des Anwenderprogrammes wiederholt ein Momentanwert zugewiesen wird,
- Definieren zumindest einer Zuweisungsbedingung (54), die beim Ausführen des Anwenderprogrammes abgearbeitet wird,
- Definieren einer Zuordnung (56), die die ausgewählte erste nicht-sicherheitsrelevante Programmvariable (52) der ausgewählten sicherheitsrelevanten Programmvariablen (50) zuordnet, wobei der Momentanwert der ausgewählten ersten nicht-sicherheitsrelevanten Programmvariablen (52) beim Ausführen des Anwenderprogrammes in Abhängigkeit von der Zuweisungsbedingung (54) der ausgewählten sicherheitsrelevanten Programmvariabeln (50) zugewiesen wird.

2. Verfahren nach Anspruch 1, **dadurch gekennzeichnet, dass** die Zuweisungsbedingung (54) eine Abfrage repräsentiert, mit der festgestellt wird, ob die ausgewählte erste nicht-sicherheitsrelevante Programmvariable (52) eine für sicherheitsrelevante Programmvariablen geforderte Zuverlässigkeitsanforderung erfüllt.

3. Verfahren nach einem der vorstehenden Ansprüche, **dadurch gekennzeichnet, dass** als Zuweisungsbedingung (54) eine Plausibilitätsabfrage definiert wird, mit der überprüft wird, ob die ausgewählte erste nicht-sicherheitsrelevante Programmvariable (52) und eine ausgewählte weitere Programmvariable konsistent zueinander sind.

4. Verfahren nach einem der vorstehenden Ansprüche, **dadurch gekennzeichnet, dass** als Zuweisungsbedingung (54) eine Plausibilitätsabfrage definiert wird, mit der überprüft wird, ob die ausgewählte erste nicht-sicherheitsrelevante Programmvariable (52) ein Vergleichskriterium erfüllt, wobei das Vergleichskriterium eine charakteristische Eigenschaft der ausgewählten ersten nicht-sicherheitsrelevanten Programmvariabeln (52) repräsentiert.

5. Verfahren nach einem der vorstehenden Ansprüche, **dadurch gekennzeichnet, dass** das Anwenderprogramm eine Vielzahl von Wandlungsanweisungen umfasst, wobei die Wandlungsanweisungen die Zuordnung (56) und die Zuweisungsbedingung (54) repräsentieren, wobei zumindest ein Teil der Wandlungsanweisungen in dem ersten Programmteil (74) enthalten sind.

6. Verfahren nach einem der vorstehenden Ansprüche, **dadurch gekennzeichnet, dass** ein die Zuordnung (56) repräsentierender erster Codeanteil (200) und ein die Zuweisungsbedingung (54) repräsentierender zweiter Codeanteil (202) zu einem Programmmodul (76, 220) zusammengefasst sind.

7. Verfahren nach einem der vorstehenden Ansprüche, **dadurch gekennzeichnet, dass** das Anwenderprogramm unter Verwendung eines auf einem Computer (12) ablaufenden Computerprogramms (16) erstellt wird, wobei das Computerprogramm (16) ein Anzeigemodul (60) umfasst, wobei das Anzeigemodul (60) bewirkt, dass während des Erstellens des Anwenderprogrammes ein Quellcode (62) für das Anwenderprogramm mittels einer Vielzahl von diesen Quellcode repräsentierender grafischer Quellcodesymbole (196) auf einer an den Computer (12) angeschlossenen Anzeigeeinheit (14) angezeigt wird, wobei die grafischen Quellcodesymbole (196) in einer Grunddarstellungsform ausgeführt sind, wobei die Vielzahl von grafischen Quellcodesymbolen (196) eine Anzahl von grafischen Wandelungscodesymbolen (198) umfassen, die einen in dem Quellcode (62) enthaltenen Wandelungscode repräsentieren, wobei der Wandelungscode einen ersten Codeanteil (200) umfasst, der die Zuordnung (56) repräsentiert und einen zweiten Codeanteil (202) umfasst, der die Zuweisungsbedingung (54) repräsentiert, wobei das Computerprogramm (16) ferner ein Erkennungsmodul (68) umfasst, mit dem zumindest einer der beiden Codeanteile (200, 202) erkannt wird, wobei bei Vorliegen eines erkannten Codeanteils das Anzeigemodul (60) bewirkt, dass zumindest ein grafisches Wandelungscodesymbol (204), welches in der Anzahl von grafischen Wandelungscodesymbolen (198) enthalten ist, in einer gegenüber der Grunddarstellungsform modifizierten Darstellungsform dargestellt wird.

8. Verfahren nach Anspruch 7, **dadurch gekennzeichnet, dass** mit dem Erkennungsmodul (68) der erste Codeanteil (200) erkannt wird.

9. Verfahren nach einem der vorstehenden Ansprüche, **dadurch gekennzeichnet, dass** das Anwenderprogramm unter Verwendung eines auf einem Computer (12) ablaufenden Computerprogramms (16) erstellt wird, wobei das Erstellen des Anwenderprogrammes durch Auswählen einer Anzahl von Programmmodulen aus einer Vielzahl von vordefinierten Programmmodulen erfolgt, wobei das Computerprogramm (16) ein Anzeigemodul (60) umfasst, das das Anzeigen einer Vielzahl von grafischen Programmmodulsymbolen (212) auf einer an den Computer (12) angeschlossenen Anzeigeeinheit (14) bewirkt, wobei die Vielzahl von grafischen Programmmodulsymbolen (212) eine erste Anzahl von grafischen Programmmodulsymbolen (214) umfasst, die die vordefinierten Programmmodule repräsentieren, und eine zweite Anzahl von grafischen Programmmodulsymbolen (216) umfasst, die die Anzahl von ausgewählten Programmmodulen repräsentieren, wobei zumindest die erste Anzahl von grafischen Programmmodulsymbolen (214) in einer Grunddarstellungsform ausgeführt sind, wobei die Anzahl von vordefinierten Programmmodulen ein während dem Erstellen des Anwenderprogrammes erstelltes Programmmodul umfasst (220), welches die Zuordnung (56) und die Zuweisungsbedingung (54) repräsentiert, wobei das erstellte Programmmodul (220) durch zumindest ein modifiziertes grafisches Programmmodulsymbol (222) repräsentiert wird, wobei das Anzeigemodul (60) bewirkt, dass das modifizierte grafische Programmmodulsymbol (222) in einer gegenüber der Grunddarstellungsform modifizierten Darstellungsform angezeigt wird.

10. Verfahren nach einem der vorstehenden Ansprüche, **dadurch gekennzeichnet, dass** beim Ausführen des Anwenderprogrammes ausgehend von der ausgewählten ersten nicht-sicherheitsrelevanten Programmvariablen (52) eine duplizierte nicht-sicherheitsrelevante Programmvariable erzeugt wird.

11. Verfahren nach Anspruch 10, **dadurch gekennzeichnet, dass** sowohl für die ausgewählte erste nicht-sicherheitsrelevante Programmvariable (52) als auch für die duplizierte nicht-sicherheitsrelevante Programmvariable die Zuweisungsbedingung (54) abgearbeitet wird.

12. Verfahren nach einem der vorstehenden Ansprüche, **dadurch gekennzeichnet, dass** es sich bie der ausgewählten ersten nicht-sicherheitsrelevanten Programmvariablen (52) um eine Programmeingangsvariable handelt, wobei der Momentanwert, der der Programmeingangsvariablen zugewiesen wird, einen Wert eines Sensorsignals (102) repräsentiert, welches mit einem nicht-fehlersicher ausgebildeten Sensor (104) erzeugt wird.

13. Vorrichtung zum Erstellen eines Anwenderprogrammes für eine Sicherheitssteuerung, (20) die dazu ausgebildet ist, eine automatisierte Anlage (22) mit einer Vielzahl von Sensoren (26) und einer Vielzahl von Aktoren (24) zu steuern, wobei das Anwenderprogramm einen ersten Programmteil (74) umfasst, in dem sicherheitsrelevante Programmvariablen fehlersicher verarbeitet werden und zumindest einen zweiten Programmteil (78) umfasst, in dem nicht-sicherheitsrelevante Programmvariablen verarbeitet werden, wobei für die nicht-sicherheitsrelevanten Programmvariablen innerhalb des zweiten Programmteils (78) eine fehlersichere Verarbeitung nicht erforderlich ist, **gekennzeichnet durch**
Einheiten (12, 14, 16) zum Definieren einer Anzahl von sicherheitsrelevanten Programmvariablen (46) und zum Auswählen einer sicherheitsrelevanten Programmvariablen (50) aus der Anzahl von sicherheitsrelevanten Programmvariablen (46), zum Definieren einer Anzahl von nicht-sicherheitsrelevanten Programmvariablen (48) und zum Auswählen einer ersten nicht-sicherheitsrelevanten Programmvariablen (52) aus der Anzahl von nicht-sicherheitsrelevanten Programmvariablen (48), wobei der ersten nicht-sicherheitsrelevanten Programmvariablen (52) beim Ausführen des Anwenderprogrammes wiederholt ein Momentanwert zugewiesen wird, zum Definieren zumindest einer Zuweisungsbedingung (54), die beim Ausführen des Anwenderprogrammes abgearbeitet wird, und zum Definieren einer Zuordnung (56), die die ausgewählte erste nicht-sicherheitsrelevante Programm variable (52) der ausgewählten sicherheitsrelevanten Programmvariablen (50) zuordnet, wobei der Momentanwert der ausgewählten ersten nicht-sicherheitsrelevanten Programmvariablen (52) beim Ausführen des Anwenderprogrammes in Abhängigkeit von der Zuweisungsbedingung (54) der ausgewählten sicherheitsrelevanten Programmvariabeln (50) zugewiesen wird.

14. Computerprogramm mit Programmcodemitteln zum Durchführen eines Verfahrens nach einem der Ansprüche 1 bis 12, wenn das Computerprogramm (16) auf einem Computer (12) ausgeführt wird.

## Claims

1. A method for creating a user program for a safety controller (20) which is designed to control an automated installation (22) having a plurality of sensors (26) and a plurality of actuators (24), wherein the user program comprises a first program portion (74), in which safety-related program variables are processed in failsafe fashion, and comprises at least one second program portion (78), in which non-safety-related program variables are processed, wherein failsafe processing is not necessary for the non-safety-related program variables within the second program portion (78), **characterized by** comprising the following steps:
- defining a number of safety-related program variables (46),
- defining a number of non-safety-related program variables (48),
- selecting a safety-related program variable (50) from the number of safety-related program variables (46),
- selecting a first non-safety-related program variable (52) from the number of non-safety-related program variables (48), wherein the first non-safety-related program variable (52) is repeatedly assigned an instantaneous value when the user program is executed,
- defining at least one assignment condition (54) which is processed when the user program is executed,
- defining an association (56) which associates the selected first non-safety-related program variable (52) with the selected safety-related program variable (50), wherein the instantaneous value of the selected first non-safety-related program variable (52) is assigned to the selected safety-related program variable (50) depending on the assignment condition (54), when the user program is executed.

2. The method of claim 1, **characterized in that** the assignment condition (54) represents a test which is used to determine whether the selected first non-safety-related program variable (52) meets a reliability requirement which is demanded for safety-related program variables.

3. The method of one of the preceding claims, **characterized in that** a plausibility test is defined as the assignment condition (54), which plausibility test is used to check whether the selected first non-safety-related program variable (52) and a selected further program variable are consistent with one another.

4. The method of one of the preceding claims, **characterized in that** a plausibility test is defined as the assignment condition (54), which plausibility test is used to check whether the selected first non-safety-related program variable (52) meets a comparison criterion, wherein the comparison criterion represents a characteristic property of the selected first non-safety-related program variable (52).

5. The method of one of the preceding claims, **characterized in that** the user program comprises a plurality of conversion instructions, wherein the conversion instructions represent the association (56) and the assignment condition (54), wherein at least some of the conversion instructions are contained in the first program portion (74).

6. The method of one of the preceding claims, **characterized in that** a first code component (200) representing the association (56) and a second code component (202) representing the assignment condition (54) are combined to form a program module (76, 220).

7. The method of one of the preceding claims, **characterized in that** the user program is created using a computer program (16) running on a computer (12), wherein the computer program (16) comprises a display module (60), wherein the display module (60) causes a user program source code (62) to be displayed on a display unit (14) connected to the computer (12) during the creation of the user program by means of a plurality of graphical source code symbols (196) representing said source code, wherein the graphical source code symbols (196) are implemented in a basic form of presentation, wherein the plurality of graphical source code symbols (196) comprises a number of graphical conversion code symbols (198) which represent a conversion code contained in the source code (62), wherein the conversion code comprises a first code component (200), which represents the association (56), and a second code component (202), which represents the assignment condition (54), wherein the computer program (16) also comprises an identification module (68) which is used to identify at least one of the two code components (200, 202), wherein the presence of an identified code component causes the display module (60) to present at least one graphical conversion code symbol (204), which is contained in the number of graphical conversion code symbols (198), in a form of presentation which is modified in comparison with the basic form of presentation.

8. The method of claim 7, **characterized in that** the identification module (68) is used to identify the first code component (200).

9. The method of one of the preceding claims, **characterized in that** the user program is created using a computer program (16) running on a computer (12), wherein the user program is created by selecting a number of program modules from a plurality of predefined program modules, wherein the computer program (16) comprises a display module (60) which displays a plurality of graphical program module symbols (212) on a display unit (14) connected to the computer (12), wherein the plurality of graphical program module symbols (212) comprises a first number of graphical program module symbols (214) which represent the predefined program modules, and a second number of graphical program module symbols (216) which represent the number of selected program modules, wherein at least the first number of graphical program module symbols (214) are implemented in a basic form of presentation, wherein the number of predefined program modules comprises a program module (220) which was written during the creation of the user program and which represents the association (56) and the assignment condition (54), wherein the written program module (220) is represented by at least one modified graphical program module symbol (222), wherein the display module (60) displays the modified graphical program module symbol (222) in a form of presentation which is modified in comparison with the basic form of presentation.

10. The method of one of the preceding claims, **characterized in that** execution of the user program involves that a duplicated non-safety-related program variable is generated from the selected first non-safety-related program variable (52).

11. The method of claim 10, **characterized in that** the assignment condition (54) is processed both for the selected first non-safety-related program variable (52) and for the duplicated non-safety-related program variable.

12. The method of one of the preceding claims, **characterized in that** the selected first non-safety-related program variable (52) is a program input variable, wherein the instantaneous value assigned to the program input variable represents a value of a sensor signal (102) generated using a sensor (104) of a nonfailsafe design.

13. An apparatus for creating a user program for a safety controller (20) designed to control an automated installation (22) having a plurality of sensors (26) and a plurality of actuators (24), wherein the user program comprises a first program portion (74), in which safety-related program variables are processed in failsafe fashion, and comprises at least one second program portion (78), in which non-safety-related program variables are processed, wherein failsafe processing is not necessary for the non-safety-related program variables within the second program portion (78), **characterized by** comprising
units (12, 14, 16) for defining a number of safety-related program variables (46) and for selecting a safety-related program variable (50) from the number of safety-related program variables (46),
units for defining a number of non-safety-related program variables (48) and for selecting a first non-safety-related program variable (52) from the number of non-safety-related program variables (48), wherein the first non-safety-related program variable (52) is repeatedly assigned an instantaneous value during the execution of the user program,
units for defining at least one assignment condition (54) which is processed during the execution of the user program, and
units for defining an association (56) which associates the selected first non-safety-related program variable (52) with the selected safety-related program variable (50), wherein the instantaneous value of the selected first non-safety-related program variable (52) is assigned to the selected safety-related program variable (50) on the basis of the assignment condition (54) when the user program is executed.

14. A computer program having program code means for canying out a method of one of claims 1 to 12 when the computer program (16) is executed on a computer (12).

## Revendications

1. Procédé de création d'un programme utilisateur destiné à un dispositif de commande de sécurité (20) qui est conçu pour commander un système automatisé (22) comportant un pluralité de capteurs (26) et une pluralité d'actionneurs (24), dans lequel le programme utilisateur comprend une première partie de programme (74) dans laquelle des variables de programme relevant de la sécurité sont traitées par sécurité intégrée, et comprend au moins une seconde partie de programme (78) dans laquelle des variables de programme ne relevant pas de la sécurité sont traitées, dans lequel, pour les variables de programme ne relevant pas de la sécurité, un traitement à sécurité intégrée n'est pas nécessaire au sein de la seconde partie de programme (78), **caractérisé par** les étapes suivantes:
- définir un certain nombre de variables de programme relevant de la sécurité (46) ;
- définir un certain nombre de variables de programme ne relevant pas de la sécurité (48) ;
- sélectionner une variable de programme relevant de la sécurité (50) parmi ledit nombre de variables de programme relevant de la sécurité (46),
- sélectionner une première variable de programme ne relevant pas de la sécurité (52) parmi ledit nombre de variables de programme ne relevant pas de la sécurité (48), dans lequel une valeur instantanée est affectée de manière répétée aux premières variables de programme ne relevant pas de la sécurité (52) lors de l'exécution du programme utilisateur,
- définir au moins une condition d'affectation (54) qui est traitée lors de l'exécution du programme utilisateur,
- définir une mise en correspondance (56) qui met en correspondance la première variable de programme ne relevant pas de la sécurité sélectionnée (52) avec les variables de programme relevant de la sécurité sélectionnées (50), dans lequel la valeur instantanée des premières variables de programme ne relevant pas de la sécurité sélectionnées (52) est affectée aux variables de programme relevant de la sécurité sélectionnées (50) lors de l'exécution du programme utilisateur conformément à la condition d'affectation (54).

2. Procédé selon la revendication 1, **caractérisé en ce que** la condition d'affectation (54) représente une demande qui est utilisée pour déterminer si la première variable de programme ne relevant pas de la sécurité sélectionnée (52) remplit une exigence de fiabilité requise pour des variables de programme relevant de la sécurité.

3. Procédé selon l'une quelconque des revendications précédentes, **caractérisé en ce qu'**une demande de plausibilité est définie en tant que condition d'affectation (54), avec laquelle il est vérifié si la première variable de programme ne relevant pas de la sécurité sélectionnée (52) et une autre variable de programme sélectionnée sont compatibles l'une avec l'autre.

4. Procédé selon l'une quelconque des revendications précédentes, **caractérisé en ce qu'**une demande de plausibilité est définie en tant que condition d'affectation (54), avec laquelle il est vérifié si la première variable de programme ne relevant pas de la sécurité sélectionnée (52) satisfait un critère de comparaison, dans lequel le critère de comparaison représente une propriété caractéristique des premières variables de programme ne relevant pas de la sécurité sélectionnées (52).

5. Procédé selon l'une quelconque des revendications précédentes, **caractérisé en ce que** le programme utilisateur comprend une pluralité d'instructions de conversion, dans lequel les instructions de conversion représentent la mise en correspondance (56) et la condition d'affectation (54), dans lesquelles au moins une partie des instructions de conversion sont contenues dans la première partie de programme (74).

6. Procédé selon l'une quelconque des revendications précédentes, **caractérisé en ce qu'**une première partie de code (200) représentant la mise en correspondance (56) et une seconde partie de code (202) représentant la condition d'affectation (54) sont regroupées dans un module de programme (76, 220).

7. Procédé selon l'une quelconque des revendications précédentes, **caractérisé en ce que** le programme utilisateur est développé au moyen d'un programme informatique (16) s'exécutant sur un ordinateur (12), dans lequel le programme informatique (16) comprend un module d'affichage (60), dans lequel le module d'affichage (60) a pour fonction d'afficher, pendant le développement du programme utilisateur, un code source (62) destiné au programme utilisateur au moyen d'une pluralité de symboles de code source graphiques (196) représentant ledit code source sur une unité d'affichage (14) reliée à l'ordinateur (12), dans lequel les symboles de code source graphiques (196) sont exécutés sous une forme de représentation de base, dans lequel la pluralité de symboles de code source graphiques (196) comprennent un certain nombre de symboles de code de conversion graphiques (198) qui représentent un code de conversion contenu dans le code source (62), dans lequel le code de conversion comprend une première partie de code (200) qui représente la mise en correspondance (56) et comprend une seconde partie de code (202) qui représente la condition d'affectation (54), dans lequel le programme informatique (16) comprend en outre un module de reconnaissance (68) avec lequel au moins l'une des deux parties de code (200, 202) est reconnue, dans lequel, lors de la présence d'une partie de code reconnue, le module d'affichage (60) fait en sorte qu'au moins un symbole de code de conversion graphique (204) qui est contenu dans ledit nombre de symboles de code de conversion graphiques (198) soit représenté sous une forme de représentation modifiée par rapport à la forme de représentation de base.

8. Procédé selon la revendication 7, **caractérisé en ce que** la première partie de code (200) est reconnue au moyen du module de reconnaissance (68).

9. Procédé selon l'une quelconque des revendications précédentes, **caractérisé en ce que** le programme utilisateur est développé au moyen d'un programme informatique (16) s'exécutant sur un ordinateur (12), dans lequel le développement du programme utilisateur s'effectue par sélection d'un certain nombre de modules de programme parmi une pluralité de modules de programme prédéfinis, dans lequel le programme informatique (16) comprend un module d'affichage (60) qui fait en sorte d'afficher une pluralité de symboles de modules de programme graphiques (212) sur une unité d'affichage (14) reliée à l'ordinateur (12), dans lequel la pluralité de symboles de modules de programme graphiques (212) comprend un premier nombre de symboles de modules de programme graphiques (214) qui représentent les modules de programme prédéfinis, et un second nombre de symboles de modules de programme graphiques (216) qui représentent ledit nombre de modules de programme sélectionnés, dans lequel au moins le premier nombre de symboles de modules de programme graphiques (214) sont exécutés sous une forme de représentation de base, dans lequel ledit nombre de modules de programme prédéfinis comprend (220) un module de programme développé pendant le développement du programme utilisateur, lequel module de programme représente la mise en correspondance (56) et la condition d'affectation (54), dans lequel le module de programme développé (220) est représenté par au moins un symbole de module de programme graphique modifié (222), dans lequel le module d'affichage (60) fait en sorte que le symbole de module de programme graphique modifié (222) soit affiché sous une forme de représentation modifiée par rapport à la forme de représentation de base.

10. Procédé selon l'une quelconque des revendications précédentes, **caractérisé en ce que**, lors de l'exécution du programme utilisateur sur la base des premières variables de programme ne relevant pas de la sécurité sélectionnées (52), une variable de programme ne relevant pas de la sécurité dupliquée est générée.

11. Procédé selon la revendication 10, **caractérisé en ce que** la condition d'affectation (54) est traitée pour la première variable de programme ne relevant pas de la sécurité sélectionnée (52) ainsi que pour la variable de programme ne relevant pas de la sécurité dupliquée.

12. Procédé selon l'une quelconque des revendications précédentes, **caractérisé en ce que** les premières variables de programme ne relevant pas de la sécurité sélectionnées (52) sont une variable d'entrée de programme, dans lequel la valeur instantanée qui est affectée aux variables d'entrée de programme représente une valeur d'un signal de capteur (102) qui est générée au moyen d'un capteur réalisé sans sécurité intégrée (104).

13. Dispositif de développement d'un programme utilisateur destiné à une unité de commande de sécurité (20) qui est conçue pour commander une installation automatisée (22) comportant un pluralité de capteurs (26) et une pluralité d'actionneurs (24), dans lequel le programme utilisateur comprend une première partie de programme (74) dans laquelle des variables de programme relevant de la sécurité sont traitées par sécurité intégrée et comprend au moins une seconde partie de programme (78) dans laquelle des variables de programme ne relevant pas de la sécurité sont traitées, dans lequel, pour les variables de programme ne relevant pas de la sécurité au sein de la seconde partie de programme (78), un traitement à sécurité intégrée n'est pas nécessaire, **caractérisé par**
des unités (12, 14, 16) destinées à définir un certain nombre de variables de programme relevant de la sécurité (46) et à sélectionner une variable de programme relevant de la sécurité (50) parmi ledit nombre de variables de programme relevant de la sécurité (46), à définir un certain nombre de variables de programme ne relevant pas de la sécurité (48) et à sélectionner une première variable de programme ne relevant pas de la sécurité (52) parmi ledit nombre de variables de programme ne relevant pas de la sécurité (48), dans lequel une valeur instantanée est affectée de manière répétée aux premières variables de programme ne relevant pas de la sécurité (52) lors de l'exécution du programme utilisateur, à définir au moins une condition d'affectation (54) qui est traitée lors de l'exécution du programme utilisateur, et à définir une mise en correspondance (56) qui met en correspondance la première variable de programme ne relevant pas de la sécurité sélectionnée (52) avec les variables de programmes relevant de la sécurité sélectionnées (50), dans lequel la valeur instantanée des premières variables de programme ne relevant pas de la sécurité sélectionnées (52) est affectée aux variables de programme relevant de la sécurité sélectionnées (50) lors de l'exécution du programme utilisateur conformément à la condition d'affectation (54).

14. Programme informatique comprenant des moyens de codage de programme destiné à mettre en oeuvre un procédé selon l'une quelconque des revendications 1 à 12 lorsque le programme informatique (16) est exécuté sur un ordinateur (12).
